(19) Europäisches Patentamt
European Patent Office
Office européen des brevets

(11) **EP 3 106 901 B1**

(12) **EUROPÄISCHE PATENTSCHRIFT**

(45) Veröffentlichungstag und Bekanntmachung des Hinweises auf die Patenterteilung:
**07.03.2018   Patentblatt 2018/10**

(51) Int Cl.:
**G01W 1/10** *(2006.01)*          *G01W 1/00* *(2006.01)*

(21) Anmeldenummer: **16173886.9**

(22) Anmeldetag: **10.06.2016**

(54) **UMWELTMESSUNGEN MITTELS GEOGRAPHISCH VERTEILTER, MOBILER SENSOREN**

ENVIRONMENTAL MEASUREMENTS USING GEOGRAPHICALLY DISPERSED MOBILE SENSORS

MESURES ENVIRONNEMENTALES A L'AIDE DE CAPTEURS MOBILES REPARTIS GEOGRAPHIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2015   DE 102015209602**

(43) Veröffentlichungstag der Anmeldung:
**21.12.2016   Patentblatt 2016/51**

(73) Patentinhaber: **Volkswagen Aktiengesellschaft 38440 Wolfsburg (DE)**

(72) Erfinder: **PLACHETKA, Christopher 38458 Velpke (DE)**

(56) Entgegenhaltungen:
**WO-A1-2014/023246       JP-A- H11 272 986 US-A1- 2012 215 446**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bereitstellen von Schätzwerten einer Umgebungseigenschaft mittels in mobilen Datenquellen angeordneter Sensoren. Bei den Datenquellen kann es sich beispielsweise um jeweils ein Kraftfahrzeug oder ein portables mobiles Endgerät handeln. Als Umgebungseigenschaft kann beispielsweise die Lufttemperatur ermittelt werden.

Kraftfahrzeuge und mobile Endgeräte sind mit vielfältiger Sensorik ausgestattet, deren Messdaten anderen Kraftfahrzeugen und Dritten zur Verfügung gestellt werden können. Allerdings lässt sich ein Bewegungsprofil solcher mobiler Datenquellen (Kraftfahrzeuge, mobile Endgeräte) nicht vorschreiben. Damit stellen diese Datenquellen eine Unsicherheit dar, da Messwerte prinzipiell zu zufälligen Zeiten und an zufälligen Orten produziert werden. Damit ist ein spezielles Verfahren nötig, um für eine vorgegebene Position und einen vorgegebenen Zeitpunkt aus diesen unsicheren Messwerten einen Schätzwert zu bilden, der genau ist und eine möglichst geringe Messtoleranz oder Messvarianz aufweist.

Ein zweites Problem besteht darin, dass bei flächendeckender Vermessung einer Umgebungseigenschaft zur Kartographierung derselben eine Vielzahl der mobilen Datenquellen verwendet werden muss und sich diese Datenbasis jedoch nicht in vollem Umfang durch den Datenübertragungskanal an eine zentrale Rechteneinrichtung, beispielsweise einen Server des Internets, übertragen lässt, da dies zum einen wirtschaftlich nicht zu rechtfertigende Übertragungsbandbreiten und zum anderen ein Datenvolumen hervorrufen würde, das durch die zentrale Rechteneinrichtung nur mit technisch unerwünscht großem Aufwand verarbeitet werden könnte.

Aus der DE 101 39 668 A1 ist ein Verfahren zum Erzeugen von fahrrouten bezogenen Wetterinformationen und/oder Straßenzustandsinformationen bekannt. Streckenbezogene Messdaten können von Kraftfahrzeugen erhoben werden und über eine Funkstrecke einer Zentrale zugänglich gemacht werden. Über Fahrzeugsensoren können Temperatur, Sichtweite, Reibwert und weitere Daten gewonnen werden, die in kausalem Zusammenhang mit der Wettersituation stehen. Die zentrale Rechteneinrichtung referenziert alle von den Kraftfahrzeugen empfangenen Daten auf einer digitalen Straßenkarte und ermittelt Wettergebiete, in welchen dieselbe Wetterlage anzutreffen ist.

Aus der DE 10 2012 004 998 A1 ist ein Verfahren zur Bereitstellung von lokalen Wetterdaten durch Kraftfahrzeuge bekannt. Die Kraftfahrzeuge weisen einen Temperatursensor, ein Navigationsgerät und eine Kommunikationsschnittstelle auf. Von den Kraftfahrzeugen werden eine Erfassungsposition sowie die an der Erfassungsposition erfassten Wetterdaten zu einer Zentralstelle übermittelt. Diese ordnet mittels der Erfassungsposition die Wetterdaten einer digitalen Straßenkarte zu und erstellt hierdurch eine aktuelle Wetterkarte.

Bei diesen Verfahren kann sich durch Eintragen der einzelnen Messwerte in eine digitale Karte das Problem ergeben, dass jeder Messwert aufgrund der Messvarianz der Sensoren in den Kraftfahrzeugen ein sehr unregelmäßiges Abbild der tatsächlichen Wettersituation ergibt. Des Weiteren kann nicht für einen vorgebbaren Ort und einen vorgebbaren Zeitpunkt ein Schätzwert z.B. der Temperatur angegeben werden. In der DE 10 2007 050 375 A1 ist ein Verfahren zur Verwendung von Wetterinformationen in einem Kraftfahrzeug beschrieben. Mittels der Wetterinformationen werden eine Abstandsregelung, eine Klimaregelung und/oder ein Sicherheitssystem konfiguriert oder angepasst, um das System an die aktuelle oder vorhergesagte Wettersituation anzupassen.

Aus der US 2012/0215446, JP H11 272986 A, und WO 2014/023246 sind Methoden bekannt, von mobilen Datenquellen gemessene Umgebungseigenschaften an eine zentrale Rechteneinheit zu übermitteln, um daraus Vorhersagen für einen bestimmten Ort zu ermitteln.

Der Erfindung liegt die Aufgabe zugrunde, auf der Grundlage mobiler Sensoren, deren Bewegung nicht vorgegeben werden kann, eine Umgebungseigenschaft einer Umgebung geografisch zu vermessen.

Die Aufgabe wird durch den Gegenstand des unabhängigen Patentanspruchs gelöst. Vorteilhafte Weiterbildungen der Erfindung ergeben sich durch die Merkmale der abhängigen Patentansprüche.

Die Erfindung umfasst ein Verfahren zum Ermitteln oder Bereitstellen von Schätzwerten einer Umgebungseigenschaft mittels in mobilen Datenquellen angeordneter Sensoren. Beispielsweise können Schätzwerte einer Temperatur für unterschiedliche Positionen in der Umgebung, beispielsweise in einem Land oder einer Stadt, ermittelt werden. Die mobilen Datenquellen können jeweils beispielsweise ein Kraftfahrzeug oder ein mobiles Endgerät, beispielsweise ein Mobiltelefon oder ein Smartphone oder ein Tablet-PC oder eine Smartwatch, sein.

Um mittels der Sensoren der mobilen Datenquellen genaue Schätzwerte mit geringer Schätzvarianz bereitzustellen, werden die folgenden Verfahrensschritte durchgeführt. Die Datenquellen erzeugen mittels ihres Sensors oder ihrer Sensoren jeweils mehrere Messwerte der Umgebungseigenschaft an jeweiligen Messpositionen zu jeweiligen Messzeitpunkten. Die Datenquellen können sich dabei bewegen, sodass sich die Messpositionen unterscheiden. Die erzeugten Messwerte werden jeweils in einem Speicher der Datenquelle gespeichert, der hier als Prebuffer bezeichnet ist. Aus den gespeicherten Messwerten bilden die Datenquellen jeweils einen Messwertvektor. Der Messwertvektor stellt eine Messwertreihe oder eine Menge von Messwerten dar. Des Weiteren ermittelt jede Datenquelle für sich mittels einer hier als Vorfusion bezeichneten Methode anhand des Messwertvektors einen Quellenschätzwert, also einen vorläufigen Schätzwert der Umgebungseigenschaft basierend auf den quelleneigenen Messwerten. Hierbei werden dem Quellenschätzwert eine Bezugsposition und ein Bezugszeitpunkt zugeordnet. Durch die Vorfusion werden dabei die Messwerte des Messwertvektors jeweils in Abhängigkeit vom Abstand der Messposition des Messwerts zu dieser Bezugsposition und/oder in Abhängigkeit vom Abstand des Messzeitpunkts des Messwerts zu dem Bezugszeitpunkt gewichtet. Mit anderen Worten werden der räumliche Abstand zu der Bezugsposition und/oder der temporale oder zeitliche Abstand der einzelnen Messwerte zu dem Messzeitpunkt als Gewichtung für die Messwerte berücksichtigt.

Jede Datenquelle sendet dann ihren Quellenschätzwert, dessen Bezugsposition und dessen Bezugszeitpunkt an eine quellenexterne Recheneinrichtung aus. Diese Recheneinrichtung kann beispielsweise durch einen Internetserver bereitgestellt sein. Die Recheneinrichtung fasst nun die Quellenschätzwerte aller mobilen Datenquellen zusammen. Hierzu werden virtuelle Messstationen definiert, indem jeweils als virtuelle Messstation eine Stationsposition und ein Einzugsgebiet der Messstation festgelegt werden. Die Recheneinrichtung ordnet die empfangenen Quellenschätzwerte jeweils einem jeweiligen Einzugsgebiet zumindest einer der Messstationen anhand der jeweiligen Bezugsposition des Quellenschätzwerts zu. Bei den Messstationen können sich deren Einzugsgebiete überschneiden, sodass ein einzelner Quellenschätzwert auch mehreren Messstationen zugeordnet werden kann. Für jede Messstation wird dann mittels einer hier als Hauptfusion bezeichneten Methode ein endgültiger Stationsschätzwert der Umgebungseigenschaft an der Stationsposition für einen vorbestimmten Schätzzeitpunkt ermittelt. Durch die Hauptfusion für eine der Messstationen werden jeweils die dem Einzugsgebiet dieser Messstation zugeordneten Quellenschätzwerte jeweils in Abhängigkeit vom Abstand der Bezugsposition des Quellenschätzwerts zur Stationsposition und/oder in Abhängigkeit vom Abstand des Bezugszeitpunkts des Quellenschätzwerts zum Schätzzeitpunkt gewichtet. Mit anderen Worten werden die Quellenschätzwerte der einzelnen Datenquellen noch einmal in Abhängigkeit von ihrem räumlichen Abstand zur Stationsposition und/oder ihrem zeitlichen Abstand zum Schätzzeitpunkt gewichtet.

Durch das erfindungsgemäße Verfahren ergibt sich somit eine zweistufige Fusion der Messwerte, nämlich durch die Vorfusion in jeder der Datenquellen und durch die Hauptfusion in der zentralen Recheneinrichtung. Beide Fusionen gewichten dabei die zu fusionierenden Werte in Abhängigkeit vom räumlichen Abstand zu der eigentlichen Schätzposition (Stationsposition) und/oder dem zeitlichen Abstand zum eigentlichen Schätzzeitpunkt, für welche der Stationsschätzwert des Umgebungsparameters bereitgestellt werden soll. Durch Definieren einer Vielzahl von Messstationen kann hierdurch in der Umgebung an gewünschten Stationspositionen und zu gewünschten Schätzzeitpunkten ein jeweiliger Stationsschätzwert des Umgebungsparameters bereitgestellt werden, der sich in vorteilhafter Weise dadurch auszeichnet, dass er genau ist und eine geringe Messvarianz aufweist. Simulationen haben ergeben, dass der gemäß dem erfindungsgemäßen Verfahren ermittelte Stationsschätzwert einer Lufttemperatur in 95% aller virtuellen Messstationen eine durchschnittliche Abweichung von nur 0,05 K sowie eine Varianz aufweist, die um einen Faktor 11 geringer ist als ein mittels eines der Sensoren gemessener Messwert. Das erfindungsgemäße Verfahren lässt sich vorteilsbringend auf eine Vielzahl von Umgebungsparametern anwenden. Beispielhaft sind hier genannt: Umgebungstemperatur, Umgebungsdruck, Luftfeuchtigkeit, Regen, Nebel, Sonneneinstrahlung, Luftgüte (zum Beispiel Staubgehalt und/oder $CO_2$-Gehalt), Straßenglätte, Verkehrsaufkommen.

Zu der Erfindung gehören auch optionale Weiterbildungen, durch deren Merkmale sich zusätzliche Vorteile ergeben.

In den Datenquellen können jeweils der Sensor oder die Sensoren die Messwerte mit einer vorgegebenen Messrate erzeugen. Die Messrate kann z.B. in einem Bereich von 10 Hz bis 0,1 Hz liegen. Die Messwerte werden im Prebuffer gespeichert. Gemäß einer Weiterbildung wird dann bei den Datenquellen jeweils die Vorfusion in Abhängigkeit von einem Fusionstriggersignal einer Datenregelung ausgelöst. Hierdurch werden dann wieder mehrere Messwerte zu einem Quellenschätzwert zusammengefasst. Die Datenregelung erzeugt dabei das Fusionstriggersignal, falls sich die Datenquelle um eine vorgegebene Bewegungsstrecke bewegt hat und/oder eine vorbestimmte Zeitdauer vergangen ist. Durch Vorgeben der Bewegungsstrecke ergibt sich der Vorteil, dass das Erfassungsgebiet, innerhalb welchem die Messwerte für einen spezifischen Quellenschätzwert gebildet werden, begrenzt oder vorgegeben werden kann, sodass hierdurch eine Unsicherheit oder Varianz des Quellenschätzwerts begrenzt werden kann. Durch Vorgeben der Zeitdauer ergibt sich der Vorteil, dass eine Rate, mit welcher aktuelle Quellenschätzwerte in der Recheneinrichtung bereitgestellt werden, vorgegeben werden kann. Zusätzlich oder alternativ zur Vorgabe der Bewegungsstrecke und/oder Zeitdauer sieht eine Weiterbildung vor, dass das Fusionstriggersignal erzeugt wird, falls die Datenquelle eines der Einzugsgebiete verlässt. Dann werden in vorteilhafter Weise alle zu dem Einzugsgebiet gehörigen Messwerte zu einem Quellenschätzwert zusammengefasst und an die Recheneinrichtung ausgesendet. Ein weiterer Aspekt hierzu betrifft den Ansatz, dass nur Stationsschätzwerte zu einer vorbestimmten Teilmenge der Messstationen ermittelt werden. Beispielsweise kann ein dichtes Netzt von Messstationen definiert sein, bei welchem benachbarte Messstationen einen Abstand in einem Bereich von 10 Meter bis 500 Meter, insbesondere 10 Meter bis 200 Meter, aufweisen. Als Teilmenge kann dann z.B. jede zweite oder jede dritte oder jede vierte Messstation definiert sein. Die Teilmenge der Messstationen ist insbesondere eine echte Teilmenge im mathematischen Sinne. Die Datenregelung kann hierbei das Fusionstriggersignal erzeugen, falls sich die Datenquelle im Einzugsgebiet einer der Messstationen der Teilmenge befindet und/oder das Einzugsgebiet einer der Messstationen der Teilmenge verlässt. Mittels der Teilmengendefinition kann das Datenaufkommen reguliert werde. Bei Bedarf kann dann die räumliche Dichte der Stationsschätzwerte vergrößert werden, indem z.B. für jede Messstation ein Stationsschätzwert ermittelt wird. Die Teilmengendefinition kann z.B. in Abhängigkeit von einer Anfrage durch einen Nutzer der Messstationen eingestellt werden.

Die Datenregelung kann beispielsweise durch ein Programmmodul einer Prozessoreinrichtung der Datenquelle realisiert werden.

Eine Weiterbildung betrifft das Erzeugen des Messwertvektors aus den Messwerten. Bei dieser Weiterbildung wählt bei den Datenquellen jeweils eine Auswahllogik die Messwerte anhand zumindest eines Auswahlkriteriums aus dem Prebuffer aus und fasst die ausgewählten Messwerte zu dem Messwertvektor zusammen. Das zumindest eine Auswahlkriterium umfasst zumindest eines der im folgenden genannten Kriterien. Für die Messwerte wird ein maximal zulässiges Alter vorgegeben. Mit anderen Worten sieht ein weiteres Kriterium einen maximalen zeitlichen Abstand zum Bezugszeitpunkt vor. Hierdurch können veraltete Messwerte ausgeschlossen werden. Es wird ein maximaler Abstand zur Bezugsposition vorgegeben. Hierdurch ergibt sich der Vorteil, dass keine unerwünschte Streuung oder Varianz des Quellenschätzwerts aufgrund zu weit auseinanderliegender (größer als der maximale Abstand) Messpositionen verursacht wird. Ein weiteres Kriterium besagt, dass die Messpositionen aller ausgewählten Messwerte innerhalb ein und desselben Einzugsgebiets einer Messstation liegen müssen. Hierdurch ergibt sich der Vorteil, dass eine Messstation einen Quellenschätzwert bereitgestellt bekommt, der ausschließlich aus Messwerten innerhalb ihres Einzugsgebiets gebildet ist. Hierdurch wird verhindert, dass die Messgrenzen des Einzugsgebiets verschwimmen. Die besagte Auswahllogik kann beispielsweise ebenfalls durch ein Programmmodul einer Prozessoreinrichtung der jeweiligen Datenquelle bereitgestellt sein.

Eine Weiterbildung verhindert, dass unsinnige Messwerte mittels der Sensoren erzeugt werden. Bei dieser Weiterbildung blockiert bei den Datenquellen jeweils eine Validierung das Speichern der Messwerte, falls ein vorbestimmtes Plausibilitätskriterium verletzt ist. Die Validierung kann ebenfalls durch ein Programmmodul einer Prozessoreinrichtung der jeweiligen Datenquelle bereitgestellt sein. Das Plausibilitätskriterium kann beispielsweise besagen, dass in einem Tunnel erhobene Regensensordaten keine Aussagekraft in Bezug auf die Niederschlagsmenge in dem Gebiet haben. Die Validierung kann dann auf der Grundlage beispielsweise von Navigationsdaten ermitteln, ob sich die Datenquelle gerade in einem Tunnel oder innerhalb eines Gebäudes befindet. Ein weiteres Plausibilitätskriterium kann besagen, dass bei einem Kraftfahrzeug innerhalb einer vorbestimmten Zeitdauer im Anschluss an einen Start oder eine Losfahrt des Kraftfahrzeugs Temperaturmesswerte eines Außentemperatursensors nicht verwendet werden dürfen. Hierdurch kann vermieden werden, dass durch Sonnenstrahlung aufgeheizte Verkleidungsteile des Kraftfahrzeugs die Umgebungsluft im Bereich des Temperatursensors aufheizen und hierdurch die Temperaturmessung verfälschen.

Eine andere Weiterbildung betrifft die Ausgestaltung der Vorfusion. Bei den Datenquellen umfasst die Vorfusion gemäß dieser Weiterbildung jeweils, dass der Quellenschätzwert aus den Messwerten des Messwertvektors mittels einer gewichteten Least-Square-Schätzung berechnet wird. Hierbei ist insbesondere vorgesehen, dass in Abhängigkeit von dem räumlichen Abstand der Messposition zur Bezugsposition der Abstandswert einem Varianzwert zugeordnet wird, beispielsweise mittels eines Faktors, der quadratisch mit dem Abstand d steigt, also $100\ K^2/km^2$ (ausgehend von $1\ K/100\ m$). Leichter verständlich ist die Angabe $(1\ K/100\ m)^2*d^2$. Der Faktor liegt unter $100\ K^2/km^2$. Der zeitliche Abstand zwischen Messzeitpunkt und Bezugszeitpunkt kann ebenfalls mittels eines multiplikativen Faktors in einen Varianzwert umgerechnet werden. Beispielsweise kann auch hier die Varianz quadratisch mit dem Alter steigen. Die Faktoren betragen $(1{,}1\ K/h)^2$ bis $(4{,}6\ K/h)^2$. Die räumliche und die zeitliche Varianz können additiv kombiniert werden, also summiert werden. Eine Gewichtung für einen Messwert kann dann der inverse Wert sein. Bei skalaren Messwerten, wie Temperatur, ergibt sich als Least-Square-Schätzung mit Gewichtung dann eine inversvarianzgewichtete Mittelung. Die Vorfusion kann dabei ebenfalls durch die beschriebene Prozessoreinrichtung einer Datenquelle durchgeführt werden. Da lediglich inverse Varianzwerte berechnet werden müssen und dann eine Multiplikation mit einem Messwert erfolgt und diese Produkte dann summiert werden müssen, stellt die beschriebene Weiterbildung eine besonders recheneffiziente Vorfusion dar. Jede Datenquelle kann zu ihrem Quellenschätzwert zusätzlich auch die in der Vorfusion erreichte oder ermittelte Varianz an die quellenexterne Recheneinrichtung übertragen oder aussenden. Dann kann dieser Varianzwert in der Hauptfusion zusätzlich berücksichtigt werden.

Eine Weiterbildung betrifft das Festlegen der Bezugsposition, für welche innerhalb einer Datenquelle jeweils ein Quellenschätzwert ermittelt wird. Hier ergeben sich unterschiedliche Ausführungsformen. Gemäß einer Ausführungsform wird die Stationsposition einer Messstation verwendet, wobei die Stationsposition derjenigen Messstation gewählt wird, die den minimalen Abstand zur Messposition desjenigen Messwerts aufweist, der sich in der Mitte des Messwertvektors befindet. Der Begriff "Mitte" meint hierbei die Ordnung des Messwerts innerhalb des Messwertvektors oder die geografische Mitte anhand der Messpositionen oder die Messposition, welche die kleinste Summe von Abstandswerten zu den übrigen Messpositionen innerhalb des Messwertvektors aufweist. Hierdurch ergibt sich der Vorteil, dass im Nachhinein festgelegt werden kann, für welche Messstation ein Quellenschätzwert verwendet wird. Laufen beispielsweise von den beschriebenen Fusionstriggern nur der zeitgesteuerte und der streckengesteuerte Fusionstrigger und löst einer der Fusionstrigger die Vorfusion aus, wird diejenige Messstation als Bezugsort gewählt, die den minimalen Abstand zu demjenigen Messwert aufweist, der sich in der Mitte des Messwertvektors befindet. Mit anderen Worten ist hierdurch ein blindes Vorfusionieren möglich. Alternativ dazu wird die Stationsposition derjenigen Messstation gewählt, deren Einzugsgebiet verlassen wird. Diese Festlegung der Bezugsposition wird hier auch als messstationbezogene Regelung oder VM-Regelung (VM - virtuelle Messstation) bezeichnet. Beim Verlassen eines Einzugsgebiets werden also mittels der Vorfusion alle Messwerte innerhalb des Einzugsgebiets zu dem Quellenschätzwert fusioniert oder kombiniert. Alternativ dazu kann zu demjenigen Zeitpunkt, zu welchem eine Strecke zu einer Messstation kürzer wird als die Strecke zu einer bisher nächstliegenden Messstation, dies als VM-Regelung festgelegt werden. Mit anderen Worten werden Messwerte innerhalb des Einzugsgebiets auf die Stationsposition derjenigen Messstation fusioniert, welche sich dann meist in der örtlichen Mitte des Messwertvektors befindet, also diejenige Messstation, die nun weiter weg ist. Durch Festlegen einer Stationsposition als Bezugsposition ergibt sich der Vorteil, dass jeder Quellenschätzwert den Abstand 0 zu der Messstation aufweist, sodass beim Berechnen des Stationsschätzwerts mittels der Hauptfusion eine Varianz durch den räumlichen Abstand des Quellenschätzwerts zur Stationsposition den Wert Null beträgt.

Alternativ zur Nutzung einer Stationsposition kann vorgesehen sein, dass die Messposition eines der Messwerte des Messwertvektors benutzt wird, welche den minimalen Summenabstand zu den übrigen Messpositionen der Messwerte des Messwertvektors aufweist. Hierdurch ergibt sich der Vorteil, dass eine reale Messposition zugrundegelegt wird und die Vorfusion ohne jede Kenntnis der Lage von virtuellen Messstationen erfolgen kann. Alternativ dazu kann eine Position oder Koordinaten ermittelt werden, bei welcher ein mittlerer quadratischer Abstand minimiert ist. Hierdurch ergibt sich ein Quellenschätzwert mit minimaler Varianz.

Eine Weiterbildung nutzt den Messwertvektor noch zum Erkennen von Grenzen, die hier als Ereignisgrenze bezeichnet werden. Es kann sich hierbei beispielsweise um den Rand eines Regengebietes oder um ein Gebiet mit Frostgefahr, beispielsweise auf einer Brücke, handeln. Bei dieser Weiterbildung wird bei den Datenquellen jeweils aus den Messwerten ihres Messwertvektors ein Gradientenverlauf ermittelt. Mit anderen Worten werden die Messwerte gemäß ihrer Messpositionen beispielsweise als Funktionsgraph interpretiert und die mathematische Ableitung durch Differenzbildung der Messwerte berechnet. Anhand des Gradientenverlaufs wird eine Messposition mit einer Sprungstelle erkannt. Eine Sprungstelle ist dadurch definiert, dass der Gradient betragsmäßig größer als ein vorbestimmter Höchstwert ist. Mit anderen Worten wird durch die Sprungstelle angegeben, wo sich der Messwert stärker ändert, als der Höchstwert vorgibt. Hierdurch kann beispielsweise durch Messen der Temperatur ein Gebiet mit einem Temperatursprung oder ein Schattengebiet, in welchem die Sonneneinstrahlung gering ist, erkannt werden. Hierdurch ergibt sich der Vorteil, dass Grenzen von vorbestimmten homogenen Teilgebieten (Schatten, Sonnenbereich) mittels der Datenquellen vermessen werden.

Insgesamt wird durch diese Ausführungsform erreicht, dass die Erhebung von Quellenschätzwerten beziehungsweise die Verteilung der virtuellen Messstationen bedarfsabhängig fein genug aufgelöst wird, um Diskontinuitäten oder Sprungstellen zu erkennen. Mit diesen Ausführungsformen können insbesondere bedingt kontinuierliche Umgebungen vermessen werden, beispielsweise eine Landschaft, die von Sonnenschein bestrahlt wird. Bei der Vermessung von Temperaturwerten oder Lichtintensitätswerten können dann Schattengebiete oder Schattenbereiche von direkt durch Sonnenlicht bestrahlten Bereichen unterschieden werden.

Hierzu gibt es unterschiedliche weiterführende Ausführungsformen. Gemäß einer Ausführungsform werden in Abhängigkeit von der Sprungstelle bei der Vorfusion nur Messwerte berücksichtigt, die entlang eines Streckenverlaufs, beispielsweise eines Straßenverlaufs oder Fußwegverlaufs, alle diesseits oder jenseits der Sprungstelle liegen. Mit anderen Worten werden nur Messwerte verwendet, die innerhalb des Ereignisgebietes oder außerhalb des Ereignisgebietes liegen, dessen Grenze oder Rand durch die Sprungstelle markiert oder kenntlich gemacht ist. Hierdurch ergibt sich eine homogene Messwert-Datenbasis beim Berechnen des Quellenschätzwerts und somit eine Varianzverringerung. Eine Ausführungsform sieht vor, dass für zumindest eine Messstation deren Stationsposition und/oder deren Einzugsgebiet in Abhängigkeit von der Sprungstelle festgelegt werden. Hierdurch ergibt sich der Vorteil, dass die Verteilung der Messstationen innerhalb der Umgebung an das Ereignis, beispielsweise Bildung von Straßenglätte oder Schattengebieten, angepasst wird und hierbei jede Messstation ihr Einzugsgebiet derart eingeteilt bekommt, dass sich homogene Messverhältnisse ergeben. Eine Ausführungsform sieht vor, dass in Abhängigkeit von der Sprungstelle beim Erzeugen der Messwerte eine Messrate vergrößert wird. Hierdurch wird eine genauere Vermessung des Randes des Ereignisses ausgelöst.

Eine Weiterbildung berücksichtigt auch zeitlich begrenzte Ereignisse, also ereignisbezogene Umgebungseigenschaften. Bei dieser Weiterbildung werden bei zumindest einer der Datenquellen jeweils vorbestimmte Umgebungsereignisse an einer jeweiligen Detektionsposition detektiert. Ein Umgebungsereignis kann beispielsweise das Einsetzen von Regen oder das Aufhören oder Aussetzen von Regen sein. In Abhängigkeit von der Detektion der Umgebungsereignisse (Beginn von Regen und Aussetzen von Regen) wird eine virtuelle ereignisbezogene Messstation mit einem Einzugsgebiet definiert, das in Abhängigkeit von den Detektionspositionen festgelegt wird. Fährt beispielsweise ein Kraftfahrzeug durch ein Regengebiet, so wird das Einzugsgebiet in Abhängigkeit von dem Rand des Regengebiets festgelegt und hierdurch das Ereignis "Regen" durch eine ereignisbezogene Messstation überwacht. Mit anderen Worten wird das Einzugsgebiet einer Messstation ereignisabhängig festgelegt.

Eine weiterführende Ausführungsform hierzu sieht vor, dass das Einzugsgebiet der ereignisbezogenen Messstation in Teilgebiete unterteilt wird. In jedem Teilgebiet erfüllen die zugeordneten Quellenschätzwerte ein vorbestimmtes Homogenitätskriterium. Beispielsweise kann hierdurch bei einem Gewitter das Gewitterzentrum mit der höchsten Niederschlagsrate oder Niederschlagsmenge ein Teilgebiet bilden, das von weiteren Teilgebieten umgeben oder umrandet ist, in welchen die Niederschlagsmenge geringer ist. Optional kann hierbei eine Clusterung von Quellenschätzwerten mittels eines an sich aus dem Stand der Technik bekannten Algorithmus für Clusterbildung, beispielsweise einem N-Means-Algorithmus, vorgenommen werden, um die Form eines Ereignisgebietes, beispielsweise eine Wetterfront, auf Grundlage der Quellenschätzwerte zu ermitteln. Ein spezielle, histogrammbasierte Clusterung ist im Ausführungsbeispiel beschrieben. Für jedes Teilgebiet kann in der virtuellen ereignisbezogenen Messstation ein eigener Stationsschätzwert gebildet werden. Es werden also Sub-Messstationen definiert.

Eine andere Weiterbildung der Erfindung berücksichtigt, dass beim Übertragen der Quellenschätzwerte eine besonders große Datenmenge durch das Übertragen der Bezugspositionen entsteht, also durch die Koordinatendaten. Wird mit jedem Quellenschätzwert auch dessen Bezugsposition übermittelt, so macht also das Datenvolumen der Bezugspositionen den größeren Teil der zu übertragenden Datenmenge aus. Bei der Weiterbildung werden bei den Datenquellen jeweils Quellenschätzwerte zumindest zweier unterschiedlicher Umgebungseigenschaften erzeugt. Es verwenden dann alle Vorfusionen dieselbe Bezugsposition. Mit anderen Worten können die Quellenschätzwerte für mehrere unterschiedliche Umgebungseigenschaften übertragen werden, und hierbei muss dann nur eine Bezugsposition signalisiert werden. Mit anderen Worten erfolgen die Vorfusionen ortssynchron.

Des Weiteren kann in diesem Zusammenhang vorgesehen sein, dass im Rahmen der Ortssynchronität auch Daten für dieselbe Bezugsposition ermittelt und übertragen werden, die nicht notwendigerweise auch über eine Vorfusion gebildet worden sein müssen, sondern direkt gemessen oder erhoben werden, beispielsweise das Auslösen eines ABS (Antiblockiersystem) oder ESC (Electronic Stability Control) oder mittels einer anderen Datenverarbeitung erzeugt worden sind.

Eine Weiterbildung der Erfindung sieht vor, dass bei den Datenquellen jeweils mehrere Quellenschätzwerte der Umgebungseigenschaft ermittelt werden, beispielsweise zeitlich nacheinander. Die Quellenschätzwerte werden dann gemeinsam an die quellenexterne Recheneinrichtung gemäß zumindest einer Datenübertragungsstrategie ausgesendet. Eine Datenübertragungsstrategie sieht eine zeitgesteuerte Übertragung in Abhängigkeit von einem vorbestimmten Zeitintervall vor. Hierdurch ergibt sich der Vorteil, dass eine Senderate vorgegeben werden kann. Eine Datenübertragungsstrategie sieht eine streckengesteuerte Übertragung in Abhängigkeit von einem vorbestimmten zurückgelegten Streckenintervall vor. Hierdurch ist sichergestellt, dass zu einem vorbestimmten Gebiet stets aktuelle Quellenschätzwerte vorliegen. Eine Datenübertragungsstrategie sieht eine ereignisgesteuerte Datenübertragung in Abhängigkeit davon vor, dass ein vorbestimmtes Ereignis in der Umgebung detektiert wird. Hierdurch kann beispielsweise das Einsetzen oder Aussetzen von Regen mit geringer Zeitverzögerung in der zentralen Recheneinrichtung erkannt werden. Eine weitere Datenübertragungsstrategie sieht eine speichergesteuerte Übertragung in Abhängigkeit davon vor, dass ein Speicher für die Quellenschätzwerte einen vorbestimmten Füllstand erreicht, beispielsweise voll ist. Die zeit- und streckengesteuerte und ereignisgesteuerte Übertragung beeinflusst insbesondere auch das Alter der ankommenden Quellenschätzwerte in der zentralen Recheneinrichtung sowie das entstehende Datenaufkommen. Die Datenübertragungsstrategien können auch kombiniert werden. Hierbei ist dann vorgesehen, dass das Auslösen einer Datenübertragungsstrategie, also das Erzeugen eines Datenübertragungstriggers, dazu führt, dass die übrigen Datenübertragungsstrategien zurückgesetzt werden. Besonders ist vorgesehen, dass die zeitgesteuerte Datenübertragung stets mitberücksichtigt wird, da sie deterministisch und einfach zu realisieren ist.

Die im Folgenden beschriebenen Ausführungsformen betreffen denjenigen Teil des erfindungsgemäßen Verfahrens, der in der zentralen Recheneinrichtung, das heißt z.B. einem Internetserver oder Backend, durchgeführt wird.

Eine Weiterbildung sieht vor, dass beim Zuordnen der Quellenschätzwerte zu den Einzugsgebieten der Messstationen überprüft wird, ob eine Anzahl zugeordneter Quellenschätzwerte kleiner als eine vorbestimmte Mindestanzahl ist. Für diesen Fall wird dann das Einzugsgebiet zumindest zeitweise vergrößert. Mit anderen Worten wird das Einzugsgebiet der Messstation dynamisiert. Hierdurch ergibt sich der Vorteil, dass sichergestellt werden kann, dass für jede Messstation eine vorbestimmte Mindestanzahl an Quellenschätzwerten zum Berechnen eines Stationsschätzwerts bereitsteht.

Gemäß einer Weiterbildung werden bei zumindest einer der Messstationen durch die Hauptfusion von den dem Einzugsgebiet zugeordneten Quellenschätzwerten diejenigen, deren Bezugszeitpunkt in einem vorbestimmten Aggregationsintervall liegt, gemeinsam und unabhängig von ihrer zeitlichen Reihenfolge zu einem Aggregationswert zusammengefasst. Hier kann wieder die beschriebene Least-Square-Schätzung vorgesehen sein. Alternativ zur Intervallaggregation kann vorgesehen sein, dass alle Quellenschätzwerte nacheinander in der zeitlichen Reihenfolge ihrer Bezugszeitpunkte seriell akkumuliert werden. Hierdurch ergibt sich der Vorteil, dass mit jedem neu eintreffenden oder empfangenen Quellenschätzwert ein aktueller Stationsschätzwert bereitgestellt werden kann und die Daten keiner zusätzlichen Alterung in der Recheneinrichtung unterliegen. Auch für die serielle Akkumulation ist eine rekursive Least-Square-Schätzung verwendbar.

Der Aggregationswert oder der seriell gebildete Wert können dann als Stationsschätzwert bereitgestellt werden. Eine Weiterbildung betrifft das alternative Berechnen des Stationsschätzwerts. Hierzu wird gemäß der Weiterbildung ein Kalmanfilter verwendet. Eine Ausführungsform sieht dabei vor, dass der Aggregationswert eines Aggregationsintervalls in das Kalmanfilter eingegeben wird und das Kalmanfilter als Filterausgabe den Stationsschätzwert der Messstation erzeugt. Die Verwendung des Aggregationswerts ergibt den Vorteil, dass das Kalmanfilter mit einem einzelnen Prädiktions- und Messschritt den aktuellen Stationsschätzwert bildet. Dies ist besonders recheneffizient. Eine alternative Ausführungsform hierzu sieht vor, dass die einzelnen Quellenschätzwerte gemäß ihrer zeitlichen Reihenfolge in das Kalmanfilter eingegeben werden und das Kalmanfilter als Filterausgabe den Stationsschätzwert erzeugt. Hierdurch ergibt sich der Vorteil, dass die Quellenschätzwerte in der beschriebenen Weise seriell abgearbeitet werden und somit das Kalmanfilter gemäß dem zeitlichen Trend der Umgebungseigenschaft adaptiert.

Als geeignetes Kalmanfilter hat sich erwiesen, dass das Beobachtermodell des Kalmanfilters einen Tagesverlauf des Werts der Umgebungseigenschaft, z.B. der Temperatur, nachbildet. Der Tagesverlauf ist hierbei in Zeitintervalle unterteilt, in denen durch das Beobachtermodell jeweils ein vorbestimmter Gradient der zeitlichen Veränderung des Werts festgelegt ist. Beispielsweise kann ein Tagesverlauf in vier Zeitintervalle unterteilt sein, in welchen sich der Wert der Umgebungseigenschaft dann gemäß dem vorgegebenen Gradienten unterschiedlich schnell ändert. Die Gradienten können beispielsweise auf der Grundlage von Beobachtungsdaten empirisch ermittelt werden. Die Systemvarianz des Kalmanfilters kann z.B. auf der Grundlage der anhand der Beobachtungsdaten beobachteten Varianz der Gradienten oder als eine Gleichverteilung festgelegt werden. D.h. entweder gewinnt man die Varianz der Gradienten aus Beobachtungsdaten von Gradienten oder man zieht maximale Gradienten heran, definiert sich Fehlerschranken und nimmt eine Gleichverteilung des Rauschens zwischen diesen Schranken an, um damit die Varianz zu berechnen. Wenn man die Varianz aus Beobachtungsdaten kennt, braucht man keine Gleichverteilung mehr anzunehmen.

Zu der Erfindung gehört auch ein nicht gesondert beanspruchtes System, welches durch die beschriebene zentrale Recheneinrichtung und mehrere Datenquellen gebildet ist, von denen jede in der beschriebenen Weise die Vorfusion durchführt, wobei bei dem System durch die zentrale Recheneinrichtung die Hauptfusion durchgeführt wird. Das System weist den Vorteil auf, dass flächendeckend für eine Umgebung genaue ortsspezifische Schätzwerte eines Umgebungsparameters mit geringer Schätzvarianz ermittelt werden.

Im Folgenden ist ein Ausführungsbeispiel der Erfindung beschrieben. Hierzu zeigt:

Fig. 1     eine schematische Darstellung eines Systems mit einer zentralen Recheneinrichtung und mehreren mobilen Datenquellen,

Fig. 2     eine schematische Darstellung einer digitalen Karte, die durch die Recheneinrichtung von Fig. 1 zum Kartographieren von Werten eines Umgebungsparameters erstellt worden ist,

Fig. 3     eine schematische Darstellung von Komponenten des Systems von Fig. 1,

Fig. 4     eine schematische Darstellung einer der Datenquellen von Fig. 1,

Fig. 5     eine schematische Darstellung der Recheneinrichtung von Fig. 1,

Fig. 6     eine Skizze zur Veranschaulichung einer Intervallaggregation von Messwerten oder Quellenschätzwerten,

Fig. 7     eine schematische Darstellung eines Beobachtermodells eines Kalmanfilters der zentralen Recheneinrichtung,

Fig. 8     ein Diagramm zur Veranschaulichung eines zeitlichen Verlaufs eines Stationsschätzwerts, der durch ein Kalmanfilter der Recheneinrichtung berechnet worden ist,

Fig. 9     eine Skizze zur Veranschaulichung einer Anordnung von virtuellen Messstationen in der digitalen Karte von Fig. 2,

Fig. 10     eine Skizze zur Veranschaulichung der Anordnung der Messstationen im Falle einer bedingt kontinuierlichen oder diskontinuierlichen Verteilung von Messwerten,

Fig. 11     eine Skizze zur Veranschaulichung der Anordnung einer ereignisbezogenen Messstation,

Fig. 12     eine schematische Darstellung zur Veranschaulichung der Ermittlung mehrerer ereignisbezogener Messstationen,

Fig. 13     eine Skizze zur Veranschaulichung der Ermittlung eines Bezugspunkts für einen Quellenschätzwert, und

Fig. 14    eine Skizze zur Veranschaulichung einer alternativen Ermittlung eines Bezugspunkts für einen Quellenschätzwert,

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

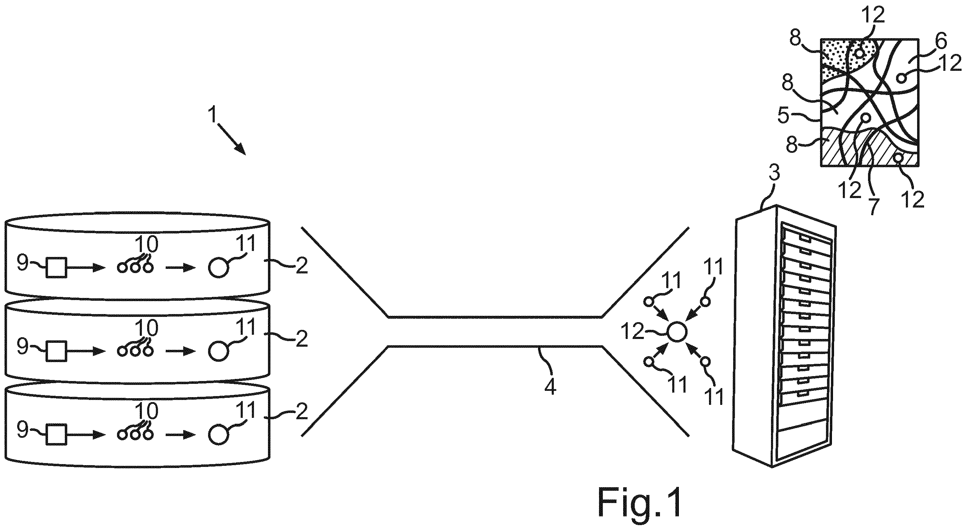

Fig. 1 zeigt in System 1 mit mehreren mobilen Datenquellen 2 und einer zentralen Recheneinrichtung 3, die über einen Datenübertragungskanal 4 kommunizieren. Bei den Datenquellen 2 kann es sich beispielsweise um jeweils ein Kraftfahrzeug oder ein portables mobiles Endgerät, beispielsweise ein Smartphone oder ein Tablet-PC oder eine Smartwatch, handeln. Im Folgenden sei ohne Beschränkung der Allgemeinheit der Darstellung angenommen, dass es sich bei jeder Datenquelle 2 um ein Kraftfahrzeug handelt. Die Recheneinrichtung 3 kann ein sogenanntes Backend oder ein Internetserver sein. Im Folgenden ist die Recheneinrichtung 3 daher als Backend 3 bezeichnet. Der Datenübertragungskanal 4 kann beispielsweise auf der Grundlage einer Mobilfunkverbindung oder WLAN-Verbindung (WLAN-wireless local area network) gebildet sein, über welche die Datenquellen 2 mit der Recheneinrichtung 3 in an sich bekannter Weise beispielsweise über das IP (Internet Protokoll) kommunizieren können.

Durch das System 1 wird eine digitale Karte 5 erstellt, in welcher eine Umgebung 6 kartographiert ist, beispielsweise eine Region mit einem Straßennetz 7. Für die Region 6 kann beispielsweise eine Temperaturverteilung ermittelt werden, sodass in der Umgebung 6 beispielsweise Temperaturzonen 8 unterschiedlicher Temperatur oder Temperaturverläufe kartographiert sind. Durch das System 1 kann die digitale Karte 5 an Verbrauchereinheiten ausgesendet werden, wie beispielsweise Kraftfahrzeuge oder mobile Endgeräte, damit deren Nutzer für die Umgebung 6 Schätzwerte der Umgebungseigenschaft erfahren oder nutzen. Nutzungsmöglichkeiten sind z.B. in der eingangs beschriebenen Druckschrift beschrieben.

Zum Erstellen der digitalen Karte 5 werden durch die mobilen Datenquellen 2 mittels jeweiliger Sensoren 9 jeweilige Messwerte 10 erzeugt, aus denen durch jede Datenquelle 2 ein jeweiliger Quellenschätzwert 11 berechnet wird. Die Quellenschätzwerte 11 werden über den Datenübertragungskanal 4 an die Recheneinrichtung 3 ausgesendet. Die Recheneinrichtung 3 fasst die Quellenschätzwerte 11 zu Stationsschätzwerten 12 zusammen, die einen jeweiligen endgültigen Schätzwert einer Umgebungseigenschaft der Umgebung 6, beispielsweise der ortsspezifischen Temperatur oder Sonneneinstrahlung oder Luftgüte oder Straßenglätte oder Niederschlagsmenge, darstellen oder repräsentieren.

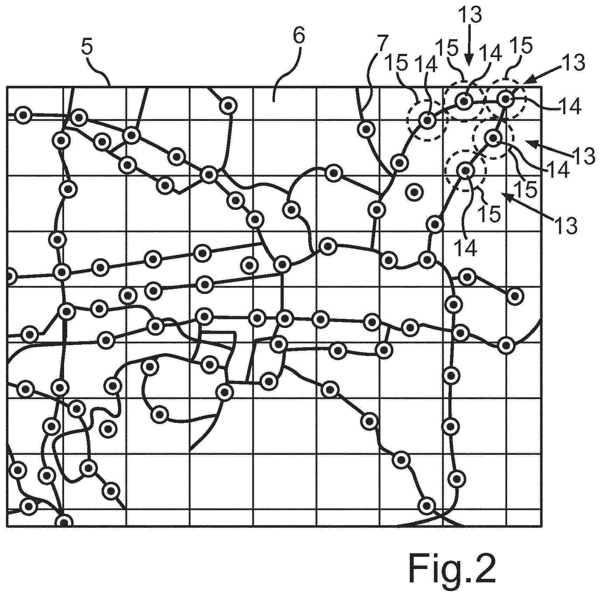

Die berechneten Stationsschätzwerte 12 sind in Fig. 2 noch einmal genauer veranschaulicht. Fig. 2 zeigt die digitale Karte 5 mit der Umgebung 6 und dem Straßennetz 7.

Entlang des Straßennetzes 7 sind Messstationen 13 verteilt angeordnet, von denen jede durch eine Stationsposition 14 und ein Erfassungsgebiet oder Einzugsgebiet 15 definiert oder charakterisiert ist. Der Übersichtlichkeit halber sind nur einige Messstationen 13 mit einem Bezugszeichen versehen. Des Weiteren sind nur einige Einzugsgebiete 15 veranschaulicht. Für jede Messstation 13 wird an deren Stationsposition 14 ein Stationsschätzwert 12 aus Quellenschätzwerten 11 gebildet, die im Einzugsgebiet 15 der jeweiligen Messstation 13 liegen. Die Anzahl der Messstationen 13 in einem Gebiet, die Stationspositionen 14 und/oder die räumliche Dichte der Messstationen 13 kann z.B. in Abhängigkeit von einer Anwendungsspezifikation eines Nutzers der Messstationen festgelegt sein. Beispielsweise kann eine Dienstleistung angeboten sein, für eine vorbestimmte Umgebung 6 eine Umgebungseigenschaft mit einer auswählbaren Orts- und/oder Zeitauflösung zu vermessen.

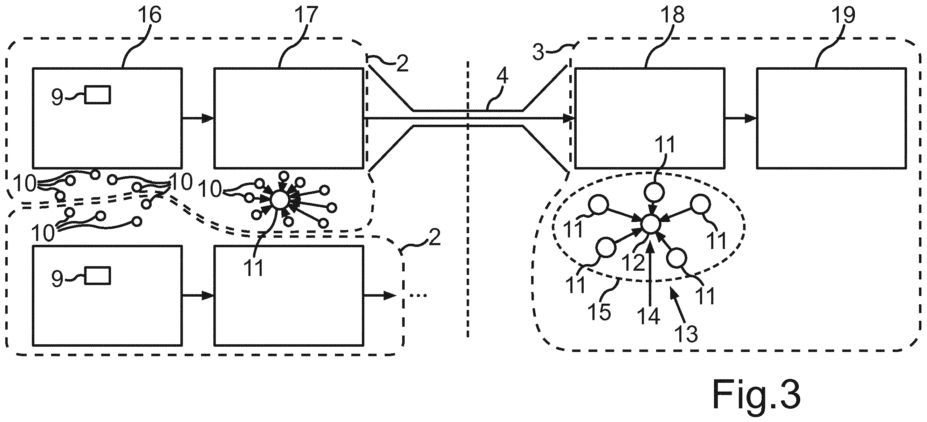

Dies ist in Fig. 3 noch einmal genauer veranschaulicht, wobei in Fig. 3 veranschaulicht ist, wie eine mittels der Sensoren 9 durchgeführte Datenerfassung oder Datenerhebung 16 die Messwerte 10 erzeugt und mittels einer Vorfusion 17 zum jeweiligen Quellenschätzwert 11 zusammengefasst werden. In der Recheneinrichtung 3 werden die Quellenschätzwerte 11 eines Einzugsgebiets 15 einer Messstation 13 mittels einer Hauptfusion 18 zum Stationsschätzwert 12 zusammengefasst und in der digitalen Karte 5 gespeichert. Die hierdurch gebildete digitale Karte 5 kann dann durch eine Distribution 19 auf die Verbrauchergeräte verteilt werden.

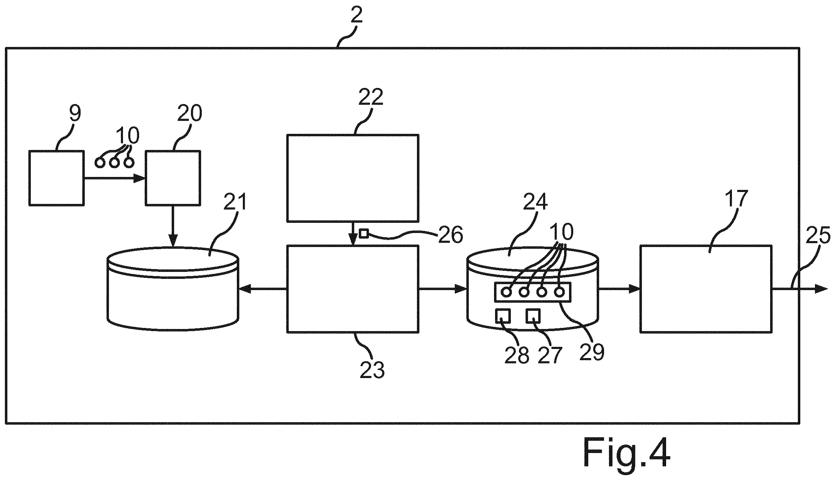

Fig. 4 zeigt eine einzelne Datenquelle 2 im Detail. Dargestellt sind neben dem Sensor 9 und der Vorfusion 17 eine Validierung 20, ein Prebuffer 21, eine Datenregelung 22, eine Auswahllogik 23, ein Fusionspuffer 24 und eine Datenübertragung 25.

Die Validierung 20 überprüft die Messwerte 10 auf ihre Plausibilität hin. Zum Beispiel werden in den ersten zehn Minuten einer Fahrt eines Kraftfahrzeugs an heißen Tagen (Temperatur oberhalb eines Schwellenwerts) keine Messwerte in den Prebuffer 21 eingespeist, weil das Fahrzeugblech noch aufgeheizt ist. Die Validierung 20 dient also dem Ausschluss systematischer Fehler, welche durch eine Vorfusion 17 und/oder die Hauptfusion 18 nicht minimiert werden können, weil sie zu einem Offset oder Bios führen, beziehungsweise zu falschen Ergebnissen führen.

Die Messwerte 10, die von der Validierung 20 als plausibel gemäß ihrem Plausibilitätskriterium eingestuft oder bewertet wurden, werden im Prebuffer 21 gespeichert. Mit jedem Messwert 10 werden auch die Messposition und der Messzeitpunkt erfasst und gespeichert.

Die Datenregelung 22 dient der Einstellung des fahrzeugseitig entstehenden Datenaufkommens und kann durch das Backend 3 konfiguriert werden. Hierdurch können bestimmte Gebiete gezielt vermessen werden, indem innerhalb eines jeweiligen Gebiets mit einer vorbestimmten Dichte oder Rate Quellenschätzwerte 11 erzeugt werden.

Es existieren verschiedene Möglichkeiten der Datenregelung, die jeweils eine Datenerhebungsstrategie bilden, die untereinander auch kombiniert werden können. Eine zeitgesteuerte Datenregelung erhebt die Daten nach einem einstellbaren Zeitintervall. Eine streckengesteuerte Datenregelung erhebt die Daten hingegen nach einem einstellbaren gefahrenen Streckenintervall und bietet damit die Möglichkeit der gezielten Ausmessung eines Gebiets. Es kann auch in Abhängigkeit von den Positionen der Messstationen 13 eine Regelung durch die Messstationen 13 (VM-Regelung) als besondere Form der streckengesteuerten Regelung realisiert werden, bei der ein Einzugsgebiet 15 gezielt vermessen wird. Wird ein Einzugsgebiet 15 verlassen, werden alle Messwerte aus dem Prebuffer 21 auf die Stationsposition 14 der Messstation 13 bezogen zusammengefasst. Der Abstand der Messstationen 13 bestimmt daher das entstehende Datenaufkommen, das heißt die Anzahl der Quellenschätzwerte 11. Eine ereignisbezogene Datenregelung stellt eine Kombination aus zeit- und streckengesteuerter Datenregelung dar, bei dem zusätzlich als Auslöser für Aktivieren der Vorfusion ein vorbestimmtes Ereignis mittels eines Sensors 9 detektiert wird.

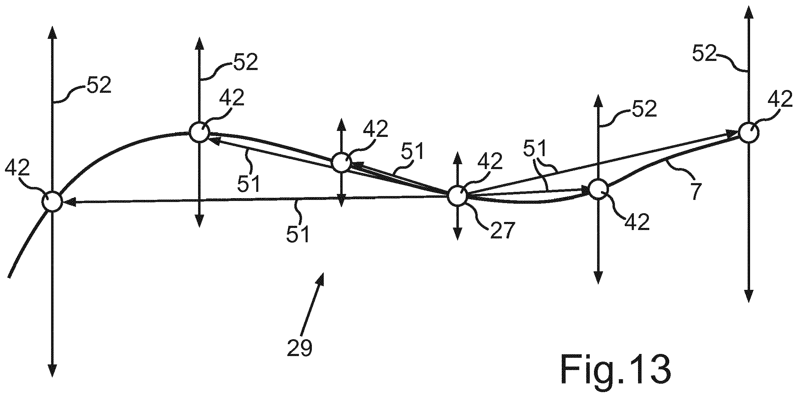

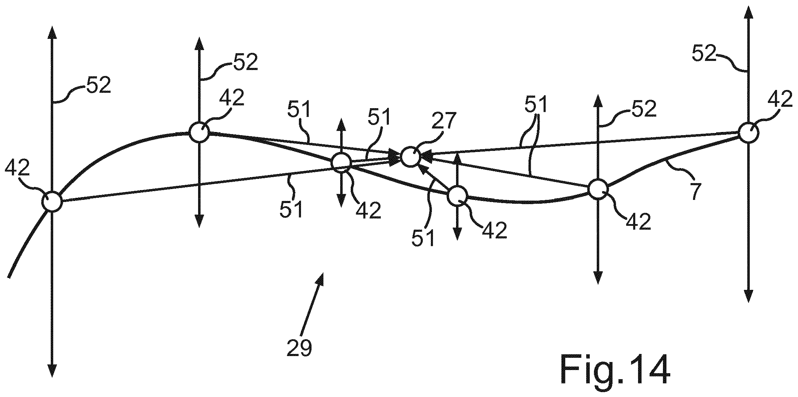

Durch die Datenregelung 22 wird ein Fusionstriggersignal 26 erzeugt, durch welches die Berechnung eines Quellenschätzwerts 11 ausgelöst wird. Dem zu berechnenden Quellenschätzwert 11 wird hierbei eine Bezugsposition 27 und ein Bezugszeitpunkt 28 zugeordnet, das heißt ein virtueller Messort und ein virtueller Messzeitpunkt. Der Bezugszeitpunkt 28 kann beispielsweise der Auslösezeitpunkt des Fusionstriggersignals 26 sein. Die Ermittlung der Bezugsposition 27 ist im Zusammenhang mit Fig. 13 und Fig. 14 beschrieben.

Löst das Fusionstriggersignal 26 die Berechnung aus, so erfolgt durch die Auswahllogik 23 eine Auswahl der Messwerte 10 aus dem Prebuffer 21. Es kann nach folgenden Auswahlkriterien ausgewählt werden: Maximal zulässiges Alter der Messwerte, maximaler Abstand zur Bezugsposition 27 der Vorfusion, Messwerte, die sich innerhalb eines vorbestimmten Einzugsgebiets 15 einer Messstation 13 befinden.

Außerdem kann durch die Auswahllogik 23 eine Gradientenbildung des aus den ausgewählten Messwerten 10 gebildeten Messwertvektors 29 zum Finden von homogenen Bereichen oder Regionen, in welchen die Messwerte 10 ein vorbestimmtes Ähnlichkeitskriterium erfüllen, ausgestaltet sein. Hierzu wird in der beschriebenen Weise eine Sprungstelle im Messwertvektor 29 ermittelt.

Der Messwertvektor 29 wird im Fusionspuffer 24 bereitgestellt. Die Daten in diesem Fusionspuffer 24 werden fusioniert. Es entsteht ein einziger, vorfusionierter Quellenschätzwert 11 für den Bezugsort 27 und den Bezugszeitpunkt 28.

Die Vorfusion 17 wird dabei bevorzugt durch eine gewichtete Least-Square-Schätzung realisiert. Dies ist im Folgenden anhand von Messwerten T1, T2 erläutert, die beispielsweise Temperaturmesswerte darstellen können. Weitere mögliche Messwerte sind durch Auslassungspunkte "..." angedeutet. Jedem Messwert T1, T2 wird eine Messvarianz Var(T1), Var(T2) zugeordnet. Die Varianz wird dabei jeweils beispielsweise als Summe aus einer Messvarianz, einer Abstandsvarianz und einer Zeitvarianz gebildet. Die Messvarianz ergibt sich durch die Messcharakteristik des Sensors 9. Die Abstandsvarianz wird aus dem räumlichen Abstand der jeweiligen Messposition zur Bezugsposition 27 gebildet. Die Zeitvarianz wird aus dem zeitlichen Abstand des Messzeitpunkts zum Bezugszeitpunkt 28 gebildet. Ein Quellenschätzwert T0 kann dann als die gewichtete Least-Square-Schätzung gemäß der folgenden Gleichung berechnet werden:

$$T0 = 1/(1/Var(T1) + 1/Var(T2) + \ldots) \times [\, T1 / Var(T1) + T2 / Var(T2) + \ldots],$$

wobei x die Multiplikation ist.

Eine Varianz Var(t0) des Quellenschätzwerts T0 ergibt sich dann zu :

$$Var(T0) = 1 / [1/Var(T1) + 1/Var(T2) + \ldots]$$

Die Varianz des Quellenschätzwerts T0 ist dabei geringer als die einzelnen Varianzen der Messwerte T1, T2.

Mit jedem Fusionstriggersignal 26 ergibt sich somit ein Quellenschätzwert 11. Zur Übertragung der Quellenschätzwerte 11 hin zum Backend 3 können durch die Datenübertragung 25 eine oder mehrere Datenübertragungsstrategien verwendet werden, wobei hier die bereits erläuterten Datenübertragungsstrategien verwendet werden können, nämlich zeitgesteuerte Datenübertragung, streckengesteuerte Datenübertragung, ereignisgesteuerte Datenübertragung und/oder speichergesteuerte Datenübertragung. Jeder Quellenschätzwert 11 wird mit seinem Varianzwert übertragen, damit die Varianz des Quellenschätzwerts 11 auch bei der Hauptfusion 18 berücksichtigt werden kann.

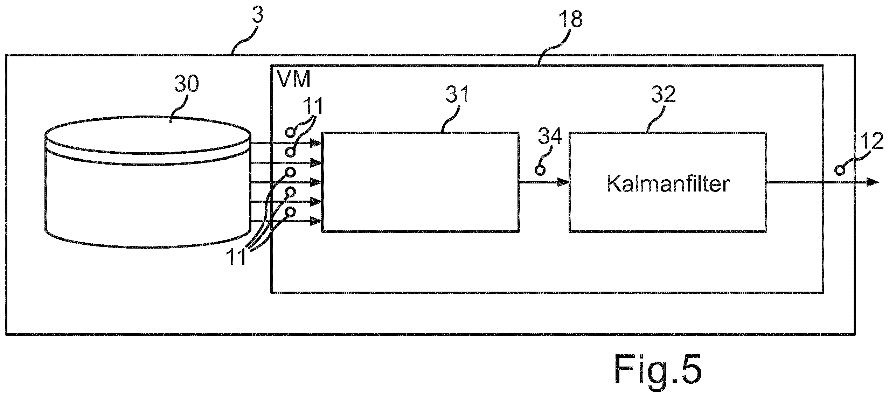

Fig. 5 veranschaulicht, wie die Quellenschätzwerte 11 durch das Backend 3 verarbeitet werden können.

Die über den Datenübertragungskanal 4 empfangenen Quellenschätzwerte 11 werden in einem seriellen Puffer 30 gespeichert. Diejenigen Quellenschätzwerte 11, deren Bezugsposition 27 innerhalb eines Einzugsgebiets 15 einer virtuellen Messstation 13 (VM) angeordnet sind oder liegen, werden für diese virtuelle Messstation 13 aus dem seriellen Puffer 30 entnommen. In dem in Fig. 5 veranschaulichten Beispiel wird aus den Quellenschätzwerten 11 ein Stationsschätzwert 12 auf der Grundlage einer Intervallaggregation 31 und eines Kalmanfilters 32 gebildet. Alternativ dazu können die Quellenschätzwerte 11 direkt durch die Intervallaggregation 31 oder seriell durch z.B. eine rekursive Mittelung oder seriell durch das Kalmanfilter 32 verarbeitet werden.

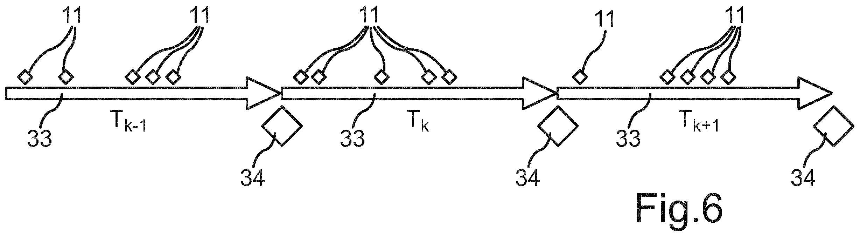

Durch die Intervallaggregation 31 werden in der in Fig. 6 veranschaulichten Weise einkommende Quellenschätzwerte 11 für ein vorbestimmtes Zeitintervall 33 (T) gesammelt und am Ende jedes Zeitintervalls 33 ein Aggregationswert 34 aus den Quellenschätzwerten 11 des Zeitintervalls 33 gebildet. Die Quellenschätzwerte 11 können hierbei in der beschriebenen Weise mit der gewichteten Least-Square-Schätzung kombiniert werden, wobei anstelle der Messvarianz die beschriebene Varianz des jeweiligen Quellenschätzwerts 11 und als Abstandsvarianz der Abstand der jeweiligen Bezugsposition 27 zur Stationsposition 14 und als Zeitvarianz der zeitliche Abstand zwischen dem Bezugszeitpunkt 28 und dem gewünschten oder vorgegebenen Schätzzeitpunkt, beispielsweise der aktuellen Zeit, ist.

Der jeweilige Aggregationswert 34 oder (bei der genannten Alternative) direkt die einzelnen Quellenschätzwerte 11 sind jeweils Eingabewerte für das Kalmanfilter 32.

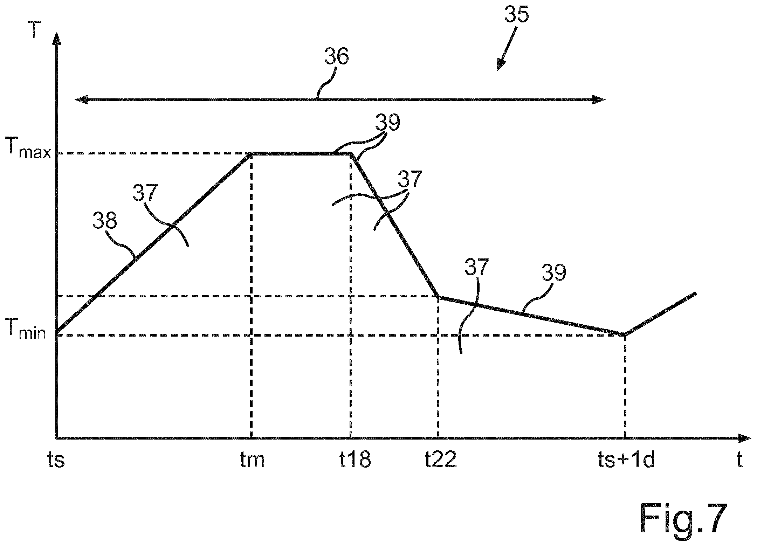

Fig. 7 veranschaulicht das Beobachtermodell 35 des an sich bekannten Beobachters des Kalmanfilters 32. Das dargestellte Beobachtermodell 35 unterteilt einen Tagesverlauf 36 eines Tages (1d) in vier Zeitintervalle 37. Beispielsweise kann von einem Startzeitpunkt ts (beispielsweise 6:00 Uhr morgens) bis zur Mittagszeit tm ein erster Gradient 38 für die zeitliche Veränderung der Umgebungseigenschaft, beispielsweise der Temperatur T, vorgegeben sein. Der Startzeitpunkt ts entspricht dem Zeitpunkt des Sonnenaufgangs, also dem Zeitpunkt, bei dem die Erwärmung, d.h. der erste Gradient eintritt. Weitere Gradienten 39 können für die zeitliche Entwicklung in den weiteren Zeitintervallen 37 vorgesehen sein, beispielsweise zwischen der Mittagszeit tm und 18:00 Uhr (t18) und von 18:00 Uhr bis 22:00 Uhr (t22), was sich als besonders vorteilhafte Einteilung des Tagesverlaufs 36 für die Temperaturentwicklung erwiesen hat.

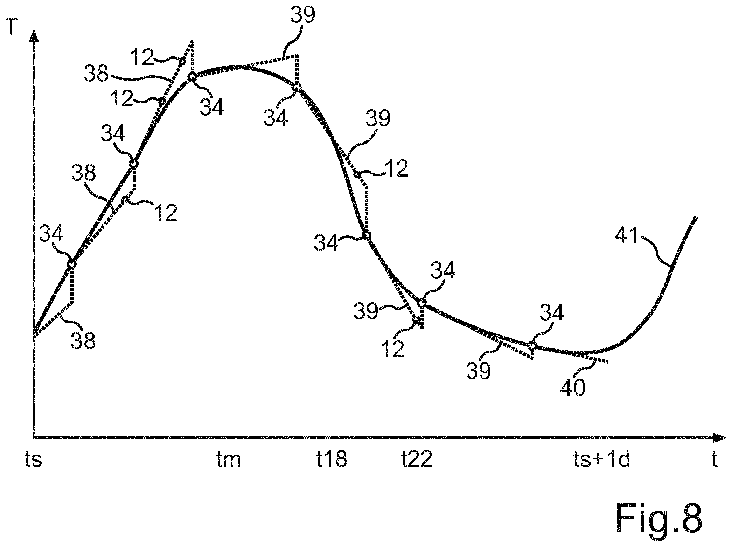

Fig. 8 veranschaulicht, wie sich durch das Kalmanfilter 32 auf der Grundlage des Beobachtermodells 35 eine Verlaufslinie 40 der Stationsschätzwerte 12 ergibt. Der Anschaulichkeit halber sind einzelnen Stationsschätzwerte 12 repräsentiert. Des weiteren ist der tatsächliche Verlauf 41 des Werts der Umgebungseigenschaft angegeben.

So lange kein Aggregationswert 34 vorliegt, nutzt das Kalmanfilter 32 den aktuellen Gradienten 38, 39 zur Berechnung des Verlaufs 40 des Stationsschätzwerts 12. Mit Empfang jedes Aggregationswerts 34 korrigiert das Kalmanfilter 32 den Verlauf 40 auf den neuen Aggregationswert 34. Der Gradient kann innerhalb eines Zeitintervalls 37 variieren, wie dies beispielsweise für das Zeitintervall ts-tm veranschaulicht ist. Hierzu nutzt das Kalmanfilter 32 die an sich bekannte Systemvarianz oder Systemfehlerkovarianzmatrix. Die System(fehlerko)varianz(matrix) dient dem Beziffern der Systemunsicherheit. Das Kalmanfilter kann zwar die Temperatur voraussagen, aber umso länger nur das Modell gerechnet wird, desto unsicherer wird die Voraussage. Trifft nun z.B. ein (sicherer) neuer Messwert auf das unsicher gewordene Modell, setzt sich der Messwert durch. Der vom Kalmanfilter bestimmte aktuelle Gradient ist an sich prinzipiell an keine Grenzen gebunden, wobei bevorzugt eine Korrektur an physikalisch sinnvolle Bereiche erfolgen sollte. Die Bestimmung des Gradienten aus den Messwerten erfolgt, indem der Kalmanfilter seine Voraussage für den nächsten Messwert mit dem tatsächlichen Messwert vergleicht. Stimmt die Voraussage nicht mit dem Messwert überein, wird der Gradient nach oben oder unten korrigiert. Simulationen haben dabei ein günstiges Einschwingverhalten beobachtet.

Beim Überschreiten einer Gradientengrenze, sofern keine Messwerte eintreffen, wird der Gradient bevorzugt auf den Durchschnittsgradienten in dem Zeitabschnitt gesetzt. D.h. es wird eine Art Reset für den Zeitraum durchgeführt. Dies verhindert, dass sich der Kalmanfilter "verläuft", weil keine Messwerte eintreffen, z.B. indem er die Temperatur nach Sonnenuntergang trotzdem weiter unbegrenzt erhöht.

Mittels des Systems 1 kann somit in der Umgebung 6 die Umgebungseigenschaft vermessen werden, wobei in Abhängigkeit von der örtlichen Varianz oder Veränderung der Umgebungseigenschaft die Wahl der Stationspositionen und/oder Einzugsgebiete getroffen wird.

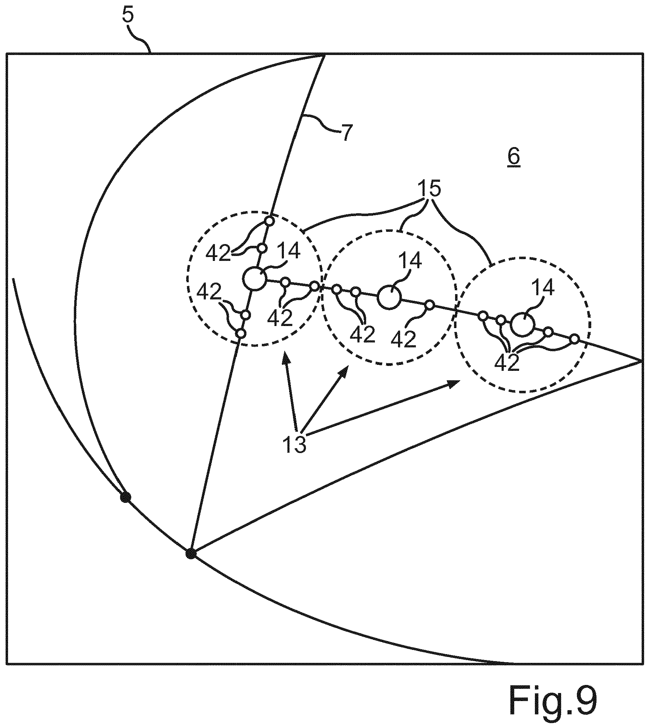

Fig. 9 veranschaulicht, dass für das Straßennetz 7 äquidistante Stationen 13 festgelegt werden können. Des Weiteren sind Messpositionen 42 dargestellt, an denen jeweils durch eine der Datenquellen 2 ein Messwert 10 generiert wurde. Bei einer kontinuierlichen Umgebungseigenschaft werden die virtuellen Messstationen anhand eines möglichst einfachen Verteilungsalgorithmus platziert, sodass die Datenquellen idealerweise keine Listen mit Stationspositionen abrufen müssen, sondern die Stationspositionen selbständig berechnen können. Die Messstationen befinden sich in einem definierten Abstand zueinander entlang von Strecken, beispielsweise dem Straßennetz 7, wobei der Abstand durch einen Parameter festgelegt wird.

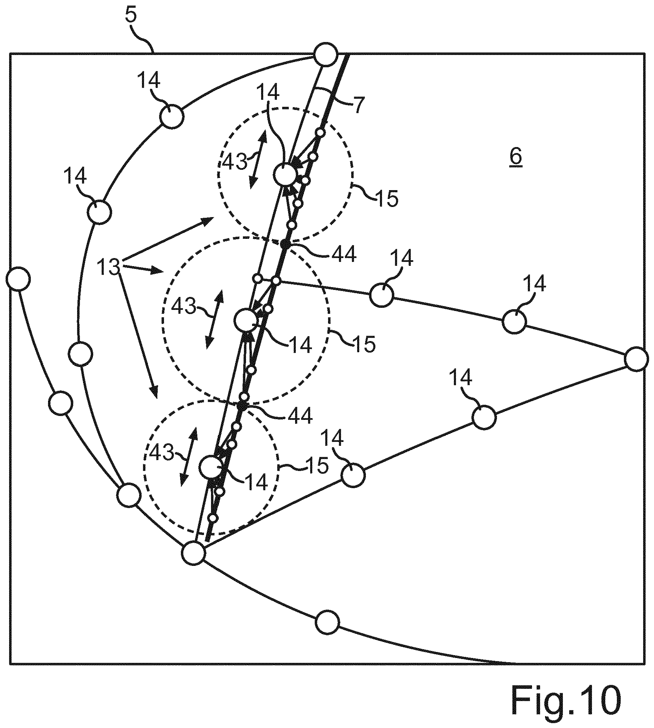

Fig. 10 veranschaulicht für eine bedienkontinuierliche Umgebungseigenschaft, wie drei Messstationen 13 durch eine Dynamisierung 43 entlang des Straßennetzes 7 verschoben werden, wenn in Messwertvektoren Sprungstellen 44 detektiert wurden. Hierdurch verschieben sowohl die Stationspositionen 14 als auch die Grenzen der Einzugsgebiete 15. Eine bedingt kontinuierliche Umgebungseigenschaft kann sich ergeben, wenn die Umgebungseigenschaft homogen oder kontinuierlich für Teilbereiche ist und zwischen homogenen oder kontinuierlichen Gebieten Sprungstellen vorhanden sind. Beispielsweise kann dies der Fall sein für die Sonnenintensität oder Helligkeit bei direkter Sonneneinstrahlung im Sommer. Homogene oder kontinuierliche Teilbereiche ergeben sich hier z.B. durch im Schatten liegende Teilgebiete einerseits (z.B. im Wald oder im Schatten eines Gebäudes) einerseits und direkt der Sonne ausgesetzte Teilgebiete andererseits. Hier wird bevorzugt die Lage der Messstationen und deren jeweiliges Einzugsgebiet so angepasst, dass die Messstation in der Mitte eines jeweiligen teilhomogenen Bereichs liegt und das Einzugsgebiet bis an die Grenze reicht. Dies wird realisiert, indem bei der fahrzeugseitigen Vorfusion eine Gradientenbildung im zu fusionierenden Messwertvektor durchgeführt wird. Zeigt sich dann ein Gradient mit betragsmäßigem Wert größer als ein Schwellenwert, so wird nur für einen Teilbereich entschieden und die betroffenen Messwerte zu einem Quellenschätzwert fusioniert. Sinnvollerweise wird auch der Streckenabschnitt des homogenen Teilbereichs übertragen. Das Backend 3 kann dann anhand dieser Informationen die Lage der Messstationen entlang der Strecke festlegen.

Bei einer ereignisbezogenen Umgebungseigenschaft werden ereignisbezogene virtuelle Messstationen dynamisch generiert. Tritt ein Fahrzeug in ein Ereignis ein, wird eine Ereignis-Registrierung erzeugt. Während sich das Fahrzeug in dem Ereignis befindet, wird versucht, ein vertretbares Maximum an Daten für dieses Ereignis zu generieren, bis der Austritt aus dem Ereignis registriert wird.

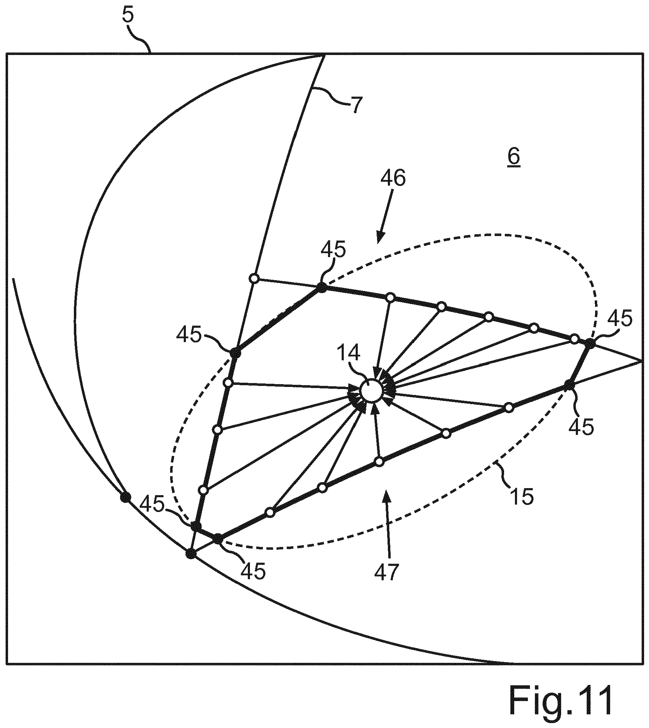

Fig. 11 veranschaulicht hierzu, wie durch ein jeweiliges Eintritts- oder Austrittsereignis an Detektionspositionen 45 eine ereignisbezogene Messstation 46 durch eine Stationsposition 14 und ein Einzugsgebiet 15 definiert werden, die durch die Detektionspositionen 45 definiert sind. Hierdurch kann beispielsweise ein Regengebiet 47 vermessen werden. Das in Fig. 11 dargestellte Oval für das Einzugsgebiet kann auch das wahre Regengebiet darstellen, welches dann durch ein errechnetes Polygon nachgebildet wird, dass durch die Detektionspositionen 45 definiert ist (siehe die fett gezeichneten Linien). Vereinfachend wird dann angenommen, dass das errechnete Polygon das Einzugsgebiet ist. Eine weichere, größere Geometrie als Einzugsgebiet zu überlagern, wie dies durch das Oval gegeben ist, ist eine Alternative. Das errechnete Polygon kann auch erweitert werden, wenn eine Detektion außerhalb des bisherigen Polygons auftritt, natürlich in einem physikalisch sinnvollen Maß, z.B. wenn die neue Detektion nicht mehr als 1 km weit entfernt ist. Darüber hinaus kann man eine neue ereignisbezogene Messstation generieren, da im Zwischenraum ggf. kein Regen fällt (wofür die Wahrscheinlichkeit steigt, je größer die Entfernung ist).

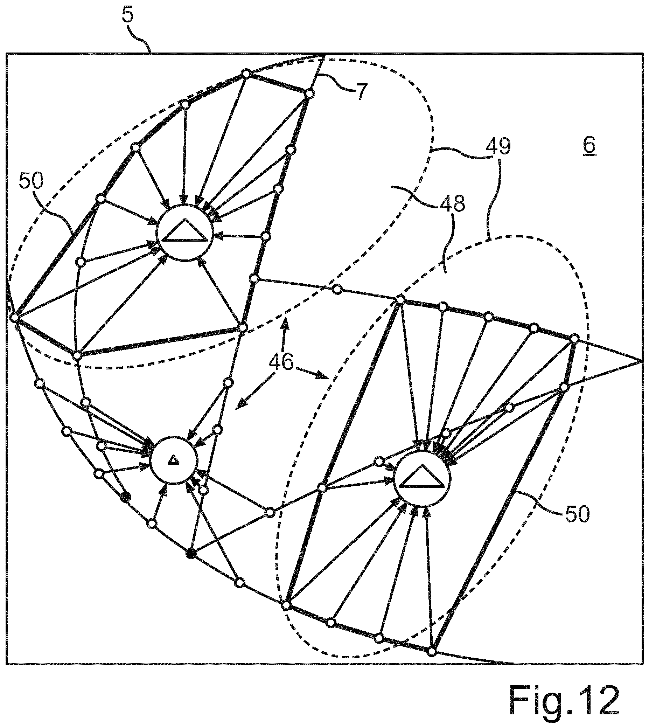

Fig. 12 veranschaulicht hierzu, wie bei mehreren Ereignissen 48 durch eine Clusterbildung ereignisbezogene virtuelle Messstationen 46 gebildet werden können. Dargestellt sind zwei als Ereignisse 48 zwei Regengebiete 49. Die Ovale stellen die wahren Grenzen der Regengebiete 49 dar. Die Regengebiete 49 werden, wie beschrieben, anhand der Eintritts- und Austrittspositionen, d.h. anhand von Detektionspositionen, durch ein Ereignis-Polygon 50 nachgebildet.

Kann das Ereignis 48 innerhalb eines Ereignis-Polygons 50 nicht als homogen betrachtet werden, muss zudem ein erweitertes Verfahren Anwendung finden:

Bilden die fahrzeugseitig erhobenen Daten das Ereignis 48 direkt ab, beispielsweise eine Nebelmessung durch eine Frontkamera, kann schlicht eine erneute Clusterbildung der Messwerte innerhalb des Ereignis-Polygons 50 stattfinden. Es werden hierdurch Sub-Messstationen mit (nicht dargestellten) Sub-Polygonen als jeweiliges Erfassungsgebiet gebildet.

Wenn die fahrzeugseitig erhobenen Daten nicht direkt das Ereignis abbilden, lässt sich ein modellbasiertes Clustering anwenden. Im Falle einer meteorologischen Regenmenge bildet der fahrzeugseitige Messwert (Wassermasse pro Fläche pro Sekunde) nicht direkt die meteorologische Regenmenge ab. Hier können Messwerte in einem Histogramm zusammengefasst werden und lokale Maxima oder Moden des Histogramms definieren dann, für welche Quellenschätzwerte Sub-Cluster gebildet werden. Zur Bildung der Sub-Cluster werden alle Messwerte abgerufen, die diesen Quellenschätzwert zuzüglich eines Toleranzbereichs bilden. In der Mitte jedes Sub-Polygons liegt eine Sub-Messstation. Nun werden alle Messwerte des Sub-Clusters zur Berechnung des Stationsschätzwerts der Sub-Messstation herangezogen.

In Fig. 13 und Fig. 14 ist noch einmal veranschaulicht, wie auf der Grundlage eines Messwertvektors 29 die Bezugsposition 27 für den jeweiligen Quellenschätzwert 11 ermittelt wird. Fig. 13 zeigt eine Variante, bei welcher einer der Messpositionen 42 als Bezugsposition 27 ausgewählt wird. Hierzu wird diejenige Messposition 42 gewählt, bei der die Summe der Abstände 51 zu den übrigen Messpositionen 42 am kleinsten ist.

Fig. 14 veranschaulicht eine Bezugsposition 27, bei welcher das Quadrat der Abstände 51 zu den Messpositionen 42 am geringsten ist.

In Fig. 13 und Fig. 14 sind des Weiteren die Abstandsvarianzen 52 veranschaulicht, das heißt die dem jeweiligen Messwert 10 zugeordnete Varianz, wie sie sich durch den räumlichen Abstand 51 von der Bezugsposition 27 ergeben. Der Übersichtlichkeit halber sind in Fig. 13 und Fig. 14 nur einige Abstandsvarianzen 52 mit einem Bezugszeichen versehen.

Als weitere mögliche Wahl einer Bezugsposition 27 kann die jeweilige Stationsposition 14 derjenigen Messstation vorgesehen sein, für welche der Quellenschätzwert 11 verwendet werden soll. Hierdurch ergibt sich der Vorteil, dass eine Abstandsvarianz des Quellenschätzwerts 11 in der Hauptfusion den Wert 0 aufweist.

Insgesamt zeigt das Beispiel, wie durch die Erfindung Fusionsverfahren zur Kartographie von Umgebungseigenschaften bereitgestellt werden kann.

**Patentansprüche**

1. Verfahren zum Bereitstellen von Schätzwerten einer Umgebungseigenschaft mittels in mobilen Datenquellen (2) angeordneter Sensoren (9), wobei

    - virtuelle Messstationen (13) jeweils durch eine Stationsposition (14) und ein Einzugsgebiet (15) definiert werden,
    - die mobilen Datenquellen (2) jeweils mehrere Messwerte (10) der Umgebungseigenschaft an jeweiligen Messpositionen (42) zu jeweiligen Messzeitpunkten in einem Prebuffer (21) speichern und aus den gespeicherten Messwerten (10) einen Messwertvektor (29) bilden und mittels einer Vorfusion (17) anhand des Messwertvektors (29) einen Quellenschätzwert (11) ermitteln, wobei dem Quellenschätzwert (11) eine Bezugsposition (27) und ein Bezugszeitpunkt (28) zugeordnet wird und durch die Vorfusion (17) die Messwerte (10) des Messwertvektors (29) jeweils in Abhängigkeit vom Abstand (51) der Messposition (42) des Messwerts (10) zur Bezugsposition (27) und/oder in Abhängigkeit vom Abstand des Messzeitpunkts des Messwerts (10) zum Bezugszeitpunkt (28) gewichtet werden,
    - jede mobile Datenquelle (2) ihren Quellenschätzwert (11), dessen Bezugsposition (27) und dessen Bezugszeitpunkt (28) an eine quellenexterne Recheneinrichtung (3) aussendet und
    - die quellenexterne Recheneinrichtung (3) die Quellenschätzwerte (11) der mobilen Datenquellen (2) jeweils einem jeweiligen Einzugsgebiet (15) zumindest einer der virtuellen Messstationen (13) anhand der jeweiligen Bezugsposition (27) zuordnet und für jede virtuellen Messstation (13) mittels einer Hauptfusion (18) einen Stationsschätzwert (12) der Umgebungseigenschaft an der Stationsposition (14) für einen vorbestimmten Schätzzeitpunkt ermittelt, wobei durch die Hauptfusion (18) die dem Einzugsgebiet (15) zugeordneten Quellenschätzwerte (11) jeweils in Abhängigkeit vom Abstand der Bezugsposition (27) des Quellenschätzwerts (11) zur Stationsposition (14) und/oder in Abhängigkeit vom Abstand des Bezugszeitpunkts (28) des Quellenschätzwerts (11) zum Schätzzeitpunkt gewichtet werden.

2. Verfahren nach Anspruch 1, wobei bei den mobilen Datenquellen (2) jeweils die Vorfusion (17) in Abhängigkeit von einem Fusionstriggersignal (26) einer Datenregelung (22) ausgelöst wird, wobei die Datenregelung (22) das Fusionstriggersignal (26) erzeugt, falls sich die mobile Datenquelle (2) um eine vorgegebene Bewegungsstrecke bewegt hat und/oder eine vorbestimmte Zeitdauer vergangen ist und/oder die mobile Datenquelle (2) eines der Einzugsgebiete (15) verlässt, und/oder wobei nur Stationsschätzwerte (12) zu einer vorbestimmten Teilmenge der virtuellen Messstationen (13) ermittelt werden und die Datenregelung (22) das Fusionstriggersignal (26) erzeugt, falls die Datenquelle (2) sich im Einzugsgebiet (15) einer der virtuellen Messstationen (13) der Teilmenge befindet und/oder das Einzugsgebiet (15) einer der virtuellen Messstationen (13) der Teilmenge verlässt.

3. Verfahren nach einem der vorhergehenden Ansprüche, wobei bei den mobilen Datenquellen (2) jeweils eine Auswahllogik (23) die Messwerte (10) anhand zumindest eines Auswahlkriteriums aus dem Prebuffer (21) auswählt und die ausgewählten Messwerte (10) zu dem Messwertvektor (29) zusammenfasst, wobei das zumindest eines Auswahlkriteriums zumindest eines der folgenden Kriterien umfasst: maximal zulässiges Alter, maximaler räumlicher Abstand (51) zur Bezugsposition (27), Messpositionen (42) aller ausgewählten Messwerte (10) liegen innerhalb des Einzugsgebiets (10) ein und derselben virtuellen Messstation (13).

4. Verfahren nach einem der vorhergehenden Ansprüche, wobei bei den mobilen Datenquellen (2) jeweils eine Validierung (20) das Speichern der Messwerte (10) in dem Prebuffer (21) blockiert, falls ein vorbestimmtes Plausibilitätskriterium verletzt ist.

5. Verfahren nach einem der vorhergehenden Ansprüche, wobei bei den mobilen Datenquellen (2) jeweils die Vorfusion (17) umfasst, dass der Quellenschätzwert (11) aus den Messwerten (10) des Messwertvektors (29) mittels einer gewichteten Least-Square-Schätzung berechnet wird.

6. Verfahren nach einem der vorhergehenden Ansprüche, wobei bei den mobilen Datenquellen (2) jeweils als Bezugsposition (27)

    - die Stationsposition (14) einer der virtuellen Messstationen (13) verwendet wird, wobei

die Stationsposition (14) derjenigen virtuellen Messstation (13) gewählt wird, die den minimalen Abstand zur Messposition (42) desjenigen Messwerts (10) aufweist, der in einer Mitte des Messwertvektors (29) liegt, oder
- die Stationsposition (14) einer der virtuellen Messstationen (13) verwendet wird, wobei die Stationsposition (14) derjenigen virtuellen Messstation (13) gewählt wird, deren Einzugsgebiet (15) verlassen wird, oder
- diejenige Messposition (42) mit dem minimalen Summenabstand zu den Messpositionen (42) aller Messwerte (10) des Messwertvektors (29) oder
- eine Position (27), bei welcher ein mittlerer quadratischer Abstand minimiert ist, festgelegt wird.

7. Verfahren nach einem der vorhergehenden Ansprüche, wobei bei den mobilen Datenquellen (2) jeweils aus den Messwerten (10) ihres Messwertvektors (29) ein Gradientenverlauf ermittelt wird und anhand des Gradientenverlaufs eine Messposition (42) mit einer Sprungstelle (44) erkannt wird, an welcher der Gradient betragsmäßig größer als ein vorbestimmter Höchstwert ist.

8. Verfahren nach Anspruch 7, wobei in Abhängigkeit von der Sprungstelle (44):

- bei der Vorfusion (17) nur Messwerte berücksichtigt werden, die entlang eines Streckenverlaufs alle diesseits oder jenseits der Sprungstelle (44) liegen und/oder
- die Stationsposition (14) und/oder das Einzugsgebiet (15) zumindest einer virtuellen Messstation (13) festgelegt wird und/oder
- beim Erzeugen der Messwerte (10) eine Messrate vergrößert wird.

9. Verfahren nach einem der vorhergehenden Ansprüche, wobei bei zumindest einer der mobilen Datenquellen (2) jeweils vorbestimmte Umgebungsereignisse an einer jeweiligen Detektionsposition (45) detektiert werden und in Abhängigkeit der Detektion der Umgebungsereignisse eine virtuelle ereignisbezogene Messstation (46) mit einem Einzugsgebiet (15), das in Abhängigkeit von den Detektionspositionen (45) festgelegt wird, definiert wird.

10. Verfahren nach Anspruch 9, wobei das Einzugsgebiet (50) der ereignisbezogenen Messstation (46) in Teilgebiete unterteilt wird, wobei in jedem Teilgebiet die zugeordneten Quellenschätzwerte (11) ein vorbestimmtes Homogenitätskriterium erfüllen.

11. Verfahren nach einem der vorhergehenden Ansprüche, wobei bei den mobilen Datenquellen (2) jeweils Messwerte (10) zumindest einer weiteren Umgebungseigenschaft erzeugt werden und bei jeweiligen Vorfusionen der jeweiligen Messwerte einer der Umgebungseigenschaften alle Vorfusionen dieselbe Bezugsposition verwenden.

12. Verfahren nach einem der vorhergehenden Ansprüche, wobei bei den mobilen Datenquellen (2) jeweils mehrere Quellenschätzwerte (11) derselben Umgebungseigenschaft ermittelt werden und die Quellenschätzwerte (11) gemeinsam an die quellenexterne Recheneinrichtung (3) gemäß zumindest einer Datenübertragungsstrategie einer Datenübertragung (25) ausgesendet werden, wobei die zumindest einer Datenübertragungsstrategie umfasst:

- eine zeitgesteuerte Übertragung in Abhängigkeit von einem vorbestimmten Zeitintervall und/oder
- eine streckengesteuerte Übertragung in Abhängigkeit von einem vorbestimmten zurückgelegten Streckenintervall und/oder
- ereignisgesteuerte Datenübertragung in Abhängigkeit davon, dass ein vorbestimmtes Ereignis in der Umgebung detektiert wird und/oder
- speichergesteuerte Übertragung in Abhängigkeit davon, dass ein Speicher für die Quellenschätzwerte einen vorbestimmten Füllstand erreicht.

13. Verfahren nach einem der vorhergehenden Ansprüche, wobei beim Zuordnen der Quellenschätzwerte (11) zu den Einzugsgebieten (15) der virtuellen Messstationen (13) überprüft wird, ob eine Anzahl zugeordneter Quellenschätzwerte (11) kleiner als eine vorbestimmte Mindestanzahl ist und für diesen Fall das Einzugsgebiet (15) zumindest zeitweise vergrößert wird.

14. Verfahren nach einem der vorhergehenden Ansprüche, wobei bei zumindest einer der virtuellen Messstationen (13) durch die Hauptfusion (18) von den dem Einzugsgebiet zugeordneten Quellenschätzwerten (11)

- diejenigen, deren Bezugszeitpunkt in einem vorbestimmten Aggregationsintervall (33) liegt, gemeinsam und unabhängig von ihrer zeitlichen Reihenfolge zu einem Aggregationswert (34) zusammengefasst werden oder

13

- alle nacheinander in der zeitlichen Reihenfolge ihrer Bezugszeitpunkte seriell akkumuliert werden.

**15.** Verfahren nach Anspruch 14, wobei der Aggregationswert (34) eines Aggregationsintervalls (33) oder die einzelnen Quellenschätzwerte (11) gemäß ihrer zeitlichen Reihenfolge jeweils in ein Kalmanfilter (32) eingegeben werden und das Kalmanfilter (32) als Filterausgabe den Stationsschätzwert (12) der virtuellen Messstation (13) erzeugt.

**16.** Verfahren nach Anspruch 15, wobei das Kalmanfilter (32) als ein Beobachtermodell (35) einen Tagesverlauf (36) eines Werts der Umgebungseigenschaft aufweist und der Tagesverlauf (36) in Zeitintervalle (37) unterteilt ist, in denen durch das Beobachtermodell (35) jeweils ein vorbestimmter Gradient (38, 39) der zeitlichen Veränderung des Werts festgelegt ist.

**Claims**

**1.** Method for providing estimated values of an environment characteristic by means of sensors (9) arranged in mobile data sources (2), wherein

- virtual measurement stations (13) are in each case defined by a station position (14) and a coverage region (15),
- the mobile data sources (2) in each case store a plurality of measurement values (10) of the environment characteristic at respective measurement positions (42) at respective measurement times in a pre-buffer (21) and form a measurement value vector (29) from the stored measurement values (10) and determine, by means of a pre-fusion (17), a source estimated value (11) on the basis of the measurement value vector (29), wherein a reference position (27) and a reference time (28) are assigned to the source estimated value (11) and, by way of the pre-fusion (17), the measurement values (10) of the measurement value vector (29) are in each case weighted depending on the spacing (51) of the measurement position (42) of the measurement value (10) from the reference position (27) and/or depending on the spacing of the measurement time of the measurement value (10) from the reference time (28),
- each mobile data source (2) send its source estimated value (11), the reference position (27) thereof and the reference time (28) thereof to a source-external computation device (3), and
- the source-external computation device (3) in each case assigns the source estimated values (11) of the mobile data sources (2) to a respective coverage region (15) of at least one of the virtual measurement stations (13) on the basis of the respective reference position (27) and, for each virtual measurement station (13), determines a station estimated value (12) of the environment characteristic at the station position (14) for a predetermined estimated time by means of a main fusion (18), wherein, by way of the main fusion (18), the source estimated values (11) assigned to the coverage region (15) are in each case weighted depending on the spacing of the reference position (27) of the source estimated value (11) from the station position (14) and/or depending on the spacing of the reference time (28) of the source estimated value (11) from the estimated time.

**2.** Method according to Claim 1, wherein, in the mobile data sources (2), the pre-fusion (17) is in each case triggered depending on a fusion trigger signal (26) of a data control system (22), wherein the data control system (22) generates the fusion trigger signal (26) if the mobile data source (2) has moved by a prescribed movement distance and/or a predetermined period of time has elapsed and/or the mobile data source (2) leaves one of the coverage regions (15), and/or wherein only station estimated values (12) are determined to form a predetermined subset of the virtual measurement stations (13) and the data control system (22) generates the fusion trigger signal (26) if the data source (2) is located in the coverage region (15) of one of the virtual measurement stations (13) of the subset and/or leaves the coverage region (15) of one of the virtual measurement stations (13) of the subset.

**3.** Method according to either of the preceding claims, wherein, in the mobile data sources (2), a selection logic (23) in each case selects the measurement values (10) from the pre-buffer (21) on the basis of at least one selection criterion and combines the selected measurement values (10) to form the measurement value vector (29), wherein the at least one selection criterion comprises at least one of the following criteria: maximum permissible age, maximum physical distance (51) from the reference position (27), measurement positions (42) of all the selected measurement values (10) lie within the coverage region (10) of one and the same virtual measurement station (13).

**4.** Method according to one of the preceding claims, wherein, in the mobile data sources (2), a validation system (20) in each case blocks the storage of the measurement values (10) in the pre-buffer (21) if a predetermined plausibility criterion has been violated.

5. Method according to one of the preceding claims, wherein, in the mobile data sources (2), the pre-fusion (17) in each case comprises the source estimated value (11) being calculated from the measurement values (10) of the measurement value vector (29) by means of a weighted least-squares estimation.

6. Method according to one of the preceding claims, wherein, in the mobile data sources (2), in each case

  - the station position (14) of one of the virtual measurement stations (13) is used as reference position (27), wherein the station position (14) of that virtual measurement station (13) that has the minimum spacing from the measurement position (42) of that measurement value (10) lying in a centre of the measurement value vector (29) is selected, or
  - the station position (14) of one of the virtual measurement stations (13) is used as reference position (27), wherein the station position (14) of that virtual measurement station (13) whose coverage region (15) has been left is selected, or
  - that measurement position (42) having the minimum total spacing from the measurement positions (42) of all the measurement values (10) of the measurement value vector (29) is set as reference position (27) or
  - a position (27) in which an average quadratic spacing is minimized is set as reference position (27).

7. Method according to one of the preceding claims, wherein, in the mobile data sources (2), a gradient profile is in each case determined from the measurement values (10) of its measurement value vector (29) and a measurement position (42) with a sudden change point (44) is identified on the basis of the gradient profile, the gradient at the sudden change point being greater in terms of magnitude than a predetermined maximum value.

8. Method according to Claim 7, wherein:

  - only measurement values that all lie on the near side or the far side of the sudden change point (44) along a route profile are taken into account in the pre-fusion (17) and/or
  - the station position (14) and/or the coverage region (15) of at least one virtual measurement station (13) is set and/or
  - a measurement rate is increased when the measurement values (10) are generated depending on the sudden change point (44).

9. Method according to one of the preceding claims, wherein, in at least one of the mobile data sources (2), predetermined environment events are in each case detected at a respective detection position (45) and, depending on the detection of the environment events, a virtual event-based measurement station (46) with a coverage region (15) that is set depending on the detection positions (45) is defined.

10. Method according to Claim 9, wherein the coverage region (50) of the event-based measurement station (46) is divided into subregions, wherein, in each subregion, the assigned source estimated values (11) satisfy a predetermined homogeneity criterion.

11. Method according to one of the preceding claims, wherein, in the mobile data sources (2), measurement values (10) of at least one further environment characteristic are generated in each case and, in respective pre-fusions of the respective measurement values of one of the environment characteristics, all the pre-fusions use the same reference position.

12. Method according to one of the preceding claims, wherein, in the mobile data sources (2), a plurality of source estimated values (11) of the same environment characteristic are determined in each case and the source estimated values (11) are sent together to the source-external computation device (3) in accordance with at least one data transmission strategy of a data transmission system (25), wherein the at least one data transmission strategy comprises:

  - time-controlled transmission depending on a predetermined time interval and/or
  - route-controlled transmission depending on a predetermined covered route interval and/or
  - event-controlled data transmission depending on whether a predetermined event is detected in the environment and/or
  - storage-controlled transmission depending on whether a storage means for the source estimated values reaches a predetermined fill level.

**13.** Method according to one of the preceding claims, wherein, when the source estimated values (11) are assigned to the coverage regions (15) of the virtual measurement stations (13), a check is carried out as to whether a number of assigned source estimated values (11) is smaller than a predetermined minimum number and, in this case, the coverage region (15) is at least temporarily increased.

**14.** Method according to one of the preceding claims, wherein, in at least one of the virtual measurement stations (13), by way of the main fusion (18) of those source estimated values (11) assigned to the coverage region

- those whose reference point lies in a predetermined aggregation interval (33) are combined to form an aggregation value (34) jointly and depending on their chronological order or
- all are accumulated serially one after another in the chronological order of their reference points.

**15.** Method according to Claim 14, wherein the aggregation value (34) of an aggregation interval (33) or the individual source estimated values (11) are in each case input into a Kalman filter (32) in accordance with their chronological order and the Kalman filter (32) generates as filter output the station estimated value (12) of the virtual measurement station (13).

**16.** Method according to Claim 15, wherein the Kalman filter (32) as an observer model (35) has a daily profile (36) of a value of the environment characteristic and the daily profile (36) is divided into time intervals (37) in which a predetermined gradient (38, 39) of the change in the value over time is in each case set by the observer model (35).

**Revendications**

**1.** Procédé de mise à disposition de valeurs estimées d'une propriété environnementale au moyen de capteurs (9) disposés dans des sources de données mobiles (2),

- des stations de mesure virtuelles (13) étant respectivement définies par une position de station (14) et une région de captage (15),
- les sources de données mobiles (2) enregistrant respectivement dans une mémoire de pré-tampon (21) plusieurs valeurs mesurées (10) de la propriété environnementale à des positions de mesure (42) respectives à des instants de mesure respectifs et formant un vecteur de valeurs mesurées (29) à partir des valeurs mesurées (10) enregistrées, puis déterminant une valeur estimée de source (11) au moyen d'une préfusion (17) à l'aide du vecteur de valeurs mesurées (29), une position de référence (27) et un instant de référence (28) étant associés à la valeur estimée de source (11) et les valeurs mesurées (10) du vecteur de valeurs mesurées (29) étant respectivement pondérées par la préfusion (17) en fonction de l'écart (51) entre la position de mesure (42) de la valeur mesurée (10) et la position de référence (27) et/ou en fonction de l'écart entre l'instant de mesure de la valeur mesurée (10) et l'instant de référence (28),
- chaque source de données mobile (2) envoyant sa valeur estimée de source (11), sa position de référence (27) et son instant de référence (28) à un dispositif de calcul (3) externe à la source et
- le dispositif de calcul (3) externe à la source associant les valeurs estimées de source (11) des sources de données mobiles (2) respectivement à une région de captage (15) correspondante d'au moins l'une des stations de mesure virtuelles (13) à l'aide de la position de référence (27) correspondante et, pour chaque station de mesure virtuelle (13), déterminant, au moyen d'une fusion principale (18), une valeur estimée de station (12) de la propriété environnementale à la position de station (14) pour un instant d'estimation prédéfini, les valeurs estimées de source (11) associées à la région de captage (15) étant respectivement pondérées par la fusion principale (18) en fonction de l'écart entre la position de référence (27) de la valeur estimée de source (11) et la position de station (14) et/ou en fonction de l'écart entre l'instant de référence (28) de la valeur estimée de source (11) et l'instant d'estimation.

**2.** Procédé selon la revendication 1, la préfusion (17) au niveau des sources de données mobiles (2) étant respectivement déclenchée en fonction d'un signal de déclenchement de fusion (26) d'un régulateur de données (22), le régulateur de données (22) générant le signal de déclenchement de fusion (26) dans le cas où la source de données mobile (2) s'est déplacée d'un trajet de déplacement prédéfini et/ou une durée prédéfinie s'est écoulée et/ou la source de données mobile (2) quitte l'une des régions de captage (15) et/ou seules des valeurs estimées de station (12) pour une quantité partielle prédéfinie des stations de mesure virtuelles (13) sont déterminées et le régulateur de données (22) générant le signal de déclenchement de fusion (26) dans le cas où la source de données (2) se trouve dans la région de captage (15) de l'une des stations de mesure virtuelles (13) de la quantité partielle et/ou quitte la région de captage (15) de l'une des stations de mesure virtuelles (13) de la quantité partielle.

3. Procédé selon l'une des revendications précédentes, une logique de sélection (23) au niveau des sources de données mobiles (2) sélectionnant respectivement les valeurs mesurées (10) depuis la mémoire de pré-tampon (21) à l'aide d'au moins un critère de sélection et regroupant les valeurs mesurées (10) sélectionnées en le vecteur de valeurs mesurées (29), l'au moins un critère de sélection comprenant au moins l'un des critères suivants : âge maximal admissible, écart spatial maximal (51) par rapport à la position de référence (27), les positions de mesure (42) de toutes les valeurs mesurées (10) sélectionnées se trouvent à l'intérieur de la région de captage (10) d'une seule et même station de mesure virtuelle (13).

4. Procédé selon l'une des revendications précédentes, une validation (20) au niveau des sources de données mobiles (2) bloquant respectivement l'enregistrement des valeurs mesurées (10) dans la mémoire de pré-tampon (21) dans le cas où un critère de plausibilité prédéfini est transgressé.

5. Procédé selon l'une des revendications précédentes, la préfusion (17) au niveau des sources de données mobiles (2) comprenant respectivement le fait que la valeur estimée de source (11) est calculée à partir des valeurs mesurées (10) du vecteur de valeurs mesurées (29) au moyen d'une estimation des moindres carrés pondérée.

6. Procédé selon l'une des revendications précédentes, la position de référence (27) utilisée au niveau des sources de données mobiles (2) étant respectivement

   - la position de station (14) de l'une des stations de mesure virtuelles (13), la position de station (14) choisie étant celle de la station de mesure virtuelle (13) qui présente l'écart minimal par rapport à la position de mesure (42) de la valeur mesurée (10) qui se trouve en un centre du vecteur de valeurs mesurées (29), ou
   - la position de station (14) de l'une des stations de mesure virtuelles (13), la position de station (14) choisie étant celle de la station de mesure virtuelle (13) dont la région de captage (15) a été quittée, ou
   - la position de mesure (42) ayant l'écart total minimal par rapport aux positions de mesure (42) de toutes les valeurs mesurées (10) du vecteur de valeurs mesurées (29) ou
   - une position (27) à laquelle un écart quadratique moyen est minimisé étant définie.

7. Procédé selon l'une des revendications précédentes, une courbe de gradient étant respectivement déterminée au niveau des sources de données mobiles (2) à partir des valeurs mesurées (10) de leur vecteur de valeurs mesurées (29) et une position de mesure (42) ayant un point de discontinuité (44) étant détectée à l'aide de la courbe de gradient, au niveau duquel point de discontinuité la valeur du gradient est supérieure à une valeur maximale prédéfinie.

8. Procédé selon la revendication 7, selon lequel, en fonction du point de discontinuité (44) :

   - seules sont prises en compte lors de la préfusion (17) les valeurs mesurées qui se trouvent le long d'un tracé de trajet toutes d'une part ou d'autre part du point de discontinuité (44) et/ou
   - la position de station (14) et/ou la région de captage (15) d'au moins une station de mesure virtuelle (13) est définie et/ou
   - une fréquence de mesure est augmentée lors de la génération des valeurs mesurées (10).

9. Procédé selon l'une des revendications précédentes, des événements environnants respectivement prédéfinis étant détectés à une position de détection (45) correspondante au niveau d'au moins l'une des sources de données mobiles (2) et une station de mesure virtuelle (46) ayant une région de captage (15), laquelle est fixée en fonction des positions de détection (45), étant définie en fonction de la détection des événements environnants.

10. Procédé selon la revendication 9, la région de captage (50) de la station de mesure (46) rapportée à l'événement étant divisée en des régions partielles, les valeurs estimées de source (11) associées dans chaque région partielle remplissant un critère d'homogénéité prédéfini.

11. Procédé selon l'une des revendications précédentes, des valeurs mesurées (10) d'au moins une propriété environnementale supplémentaire étant respectivement générées au niveau des sources de données mobiles (2) et toutes les préfusions utilisant la même position de référence lors des préfusions respectives des valeurs mesurées respectives de l'une des propriétés environnementales.

**12.** Procédé selon l'une des revendications précédentes, plusieurs valeurs estimées de source (11) de la même propriété environnementale étant respectivement déterminées au niveau des sources de données mobiles (2) et les valeurs estimées de source (11) étant envoyées en commun au dispositif de calcul (3) externe à la source conformément à au moins une stratégie de transmission de données d'une transmission de données (25), l'au moins une stratégie de transmission de données comprenant :

- une transmission commandée dans le temps en fonction d'un intervalle de temps prédéfini et/ou
- une transmission commandée par le trajet en fonction d'un intervalle de trajet parcouru prédéfini et/ou
- une transmission de données commandée par événement en fonction de la détection d'un événement prédéfini dans l'environnement et/ou
- une transmission commandée par mémoire en fonction de l'atteinte par une mémoire d'un niveau de remplissage prédéfini pour les valeurs estimées de source.

**13.** Procédé selon l'une des revendications précédentes, un contrôle étant effectué lors de l'affectation des valeurs estimées de source (11) aux régions de captage (15) des stations de mesure virtuelles (13) afin de vérifier si un nombre de valeurs estimées de source (11) affectées est inférieur à un nombre minimal prédéfini et, dans ce cas, la région de capteur (15) étant au moins partiellement agrandie.

**14.** Procédé selon l'une des revendications précédentes, selon lequel, au niveau d'au moins l'une des stations de mesure virtuelles (13), par la fusion principale (18) des valeurs estimées de source (11) affectées à la région de captage,

- celles dont l'instant de référence se trouve dans un intervalle d'agrégation (33) prédéfini sont regroupées communément et indépendamment de leur ordre chronologique en une valeur d'agrégation (34) ou
- elles sont toutes accumulées en série l'une après l'autre dans l'ordre chronologique de leurs instants de référence.

**15.** Procédé selon la revendication 14, la valeur d'agrégation (34) d'un intervalle d'agrégation (33) ou les valeurs estimées de source (11) individuelles sont respectivement appliquées à l'entrée d'un filtre de Kalman (32) conformément à leur ordre chronologique et le filtre de Kalman (32) génère comme sortie de filtre la valeur estimée de station (12) de la station de mesure virtuelle (13).

**16.** Procédé selon la revendication 15, le filtre de Kalman (32) possédant comme modèle d'observateur (35) une courbe journalière (36) d'une valeur de la propriété environnementale et la courbe journalière (36) étant divisée en intervalles de temps (37) dans lesquels un gradient (38, 39) prédéfini de la variation dans le temps de la valeur est respectivement fixé par le modèle d'observateur (35).

Fig.1

EP 3 106 901 B1

Fig.2

Fig.3

EP 3 106 901 B1

Fig.4

EP 3 106 901 B1

Fig.5

Fig.6

EP 3 106 901 B1

Fig.7

Fig.8

EP 3 106 901 B1

Fig.9

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10139668 A1
- DE 102012004998 A1
- DE 102007050375 A1
- US 20120215446 A
- JP H11272986 A
- WO 2014023246 A